(19) Europäisches Patentamt
European Patent Office
Office européen des brevets

(11) **EP 4 236 478 A1**

(12) **EUROPEAN PATENT APPLICATION**
published in accordance with Art. 153(4) EPC

(43) Date of publication:
**30.08.2023 Bulletin 2023/35**

(21) Application number: **21883266.5**

(22) Date of filing: **21.10.2021**

(51) International Patent Classification (IPC):
**H04W 52/02** (2009.01)      **H04W 72/12** (2023.01)
**H04W 72/04** (2023.01)      **H04W 76/28** (2018.01)
**H04L 5/00** (2006.01)      **H04L 1/00** (2006.01)

(52) Cooperative Patent Classification (CPC):
**H04L 1/00; H04L 5/00; H04W 52/02; H04W 72/04;**
**H04W 72/12; H04W 76/28;** Y02D 30/70

(86) International application number:
**PCT/KR2021/014769**

(87) International publication number:
**WO 2022/086198 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **22.10.2020  KR 20200137407**
       **15.01.2021  KR 20210006318**

(71) Applicant: **LG Electronics Inc.**
**Yeongdeungpo-gu**
**Seoul, 07336 (KR)**

(72) Inventors:
• **LEE, Sunghoon**
  **Seoul 06772 (KR)**
• **LEE, Youngdae**
  **Seoul 06772 (KR)**
• **KIM, Jaehyung**
  **Seoul 06772 (KR)**
• **KIM, Seonwook**
  **Seoul 06772 (KR)**
• **HWANG, Seunggye**
  **Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **METHOD FOR TRANSMITTING AND RECEIVING DOWNLINK CONTROL CHANNEL, AND DEVICE THEREFOR**

(57)    The present disclosure discloses a method by which a terminal receives a physical downlink control channel (PDCCH) in a wireless communication system. Particularly, the method comprises: receiving information related to a first search space set to be monitored by the terminal from among a plurality of search space sets; monitoring the first search space set on the basis of the information; monitoring a second search space set on the basis of the PDCCH not being received through the first search space set; and receiving the PDCCH through the second search space set.

FIG. 15

EP 4 236 478 A1

**Description**

**TECHNICAL FIELD**

The present disclosure relates to a method of transmitting and receiving a downlink control channel and apparatus therefor, and more particularly, to a method by which a base station informs a search space set to be monitored by a user equipment among a plurality of search space sets and apparatus therefor.

**BACKGROUND**

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.
Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

**DISCLOSURE**

**TECHNICAL PROBLEM**

An object of the present disclosure is to provide a method of transmitting and receiving a downlink control channel and an apparatus therefor.
It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

In an aspect of the present disclosure, there is provided a method of receiving a physical downlink control channel (PDCCH) by a user equipment (UE) in a wireless communication system. The method may include: receiving information on a first search space set to be monitored by the UE among a plurality of search space sets; monitoring the first search space set based on the information; monitoring a second search space set based on that the PDCCH is not received in the first search space set; and receiving the PDCCH in the second search space set.
The monitoring of the second search space set may be performed based on that the PDCCH is not received in the first search space set during a specific duration.
The specific duration may be related to a monitoring timer, and the monitoring timer may be restarted based on that the PDCCH is received in the first search space set.
Based on that the PDCCH is not received in the first search space set, the monitoring of the first search space set may be stopped, and the monitoring of the second search space set may started.
The second search space set may always be monitored regardless of the information.
In another aspect of the present disclosure, there is provided a UE configured to receive a PDCCH in a wireless communication system. The UE may include: at least one transceiver; at least one processor; and at least one memory operably connected to the at least one processor and configured to store instructions that, when executed, cause the at least one processor to perform operations. The operations may include: receiving information on a first search space set to be monitored by the UE among a plurality of search space sets through the at least one transceiver; monitoring the first search space set based on the information; monitoring a second search space set based on that the PDCCH is not received in the first search space set; and receiving the PDCCH in the second search space set through the at least one transceiver.
The monitoring of the second search space set may be performed based on that the PDCCH is not received in the first search space set during a specific duration.
The specific duration may be related to a monitoring timer, and the monitoring timer may be restarted based on that the PDCCH is received in the first search space set.
Based on that the PDCCH is not received in the first search space set, the monitoring of the first search space set may be stopped, and the monitoring of the second search space set may be started.

The second search space set may always be monitored regardless of the information.

In another aspect of the present disclosure, there is provided an apparatus configured to receive a PDCCH in a wireless communication system. The apparatus may include: at least one processor; and at least one memory operably connected to the at least one processor and configured to store instructions that, when executed, cause the at least one processor to perform operations. The operations may include: receiving information on a first search space set to be monitored by the UE among a plurality of search space sets; monitoring the first search space set based on the information; monitoring a second search space set based on that the PDCCH is not received in the first search space set; and receiving the PDCCH in the second search space set.

In another aspect of the present disclosure, there is provided a computer-readable storage medium including at least one computer program that causes at least one processor to perform operations. The operations may include: receiving information on a first search space set to be monitored by the UE among a plurality of search space sets; monitoring the first search space set based on the information; monitoring a second search space set based on that the PDCCH is not received in the first search space set; and receiving the PDCCH in the second search space set.

In another aspect of the present disclosure, there is provided a method of transmitting a PDCCH by a base station in a wireless communication system. The method may include: transmitting information on a first search space set to be monitored by a LTE among a plurality of search space sets; transmitting the PDCCH in the first search space set based on the information; and based on that a hybrid automatic repeat request acknowledgment (HARQ-ACK) signal for a physical downlink shared channel (PDSCH) scheduled by the PDCCH is not received, transmitting the PDCCH in a second search space set.

In a further aspect of the present disclosure, there is provided a base station configured to transmit a (PDCCH) in a wireless communication. The base station may include: at least one transceiver; at least one processor; and at least one memory operably connected to the at least one processor and configured to store instructions that, when executed, cause the at least one processor to perform operations. The operations may include: transmitting information on a first search space set to be monitored by a UE among a plurality of search space sets; transmitting the PDCCH in the first search space set based on the information; and based on that a HARQ-ACK signal for a PDSCH scheduled by the PDCCH is not received, transmitting the PDCCH in a second search space set.

## ADVANTAGEOUS EFFECTS

According to the present disclosure, when physical downlink control channel (PDCCH) monitoring adaptation for power saving within a discontinuous reception (DRX) active time is indicated to a user equipment (UE) in downlink control information (DCI), and when there is no PDCCH transmission within the DRX active time, the UE may reduce unnecessary power consumption.

When a default search space (SS) set is defined, it is possible to prepare for an error case that occurs when an SS set for a base station to transmit a PDCCH is different from an SS set for a UE to monitor the PDCCH. In addition, the default SS set may reduce the power consumption of the LTE through monitoring adaptation based on DRX timers without any indication of DCI.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates physical channels and a general signal transmission method using the physical channels in a 3rd generation partnership project (3GPP) system as an exemplary wireless communication system.

FIG. 2 illustrates a radio frame structure.

FIG. 3 illustrates a resource grid during the duration of a slot.

FIG. 4 illustrates exemplary mapping of physical channels in a slot.

FIG. 5 illustrates a process for transmitting a physical uplink control channel (PUCCH) and a physical uplink shared channel (PUSCH).

FIGS. 6, 7, and 8 are diagrams illustrating a physical downlink control channel (PDCCH) in the NR system.

FIGS. 9 and 10 are diagrams for explaining idle mode discontinuous reception (DRX) operation.

FIGS. 11 to 13 are diagrams for explaining DRX operation in a radio resource control (RRC) connected mode.

FIGs. 14 and 15 is a diagram for explaining the overall operation processes of the UE and the BS according to an embodiment of the present disclosure.

FIG. 16 is a diagram for explaining a method of monitoring DCI format 2_6.
FIG. 17 illustrates an exemplary communication system applied to the present disclosure.
FIG. 18 illustrates an exemplary wireless device applicable to the present disclosure.
FIG. 19 illustrates an exemplary vehicle or autonomous driving vehicle applicable to the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the present disclosure is not limited to the 3GPP communication system. For the background art, terms, and abbreviations used in the present disclosure, refer to the technical specifications published before the present disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

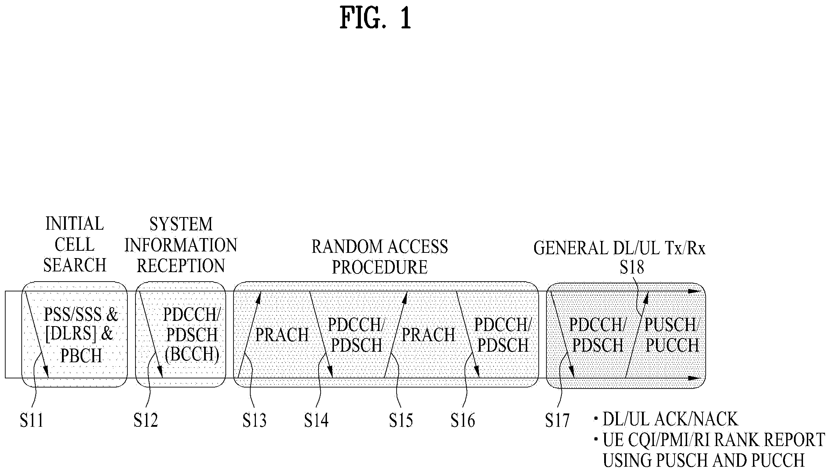

FIG. 1 illustrates physical channels and a general signal transmission method using the physical channels in a 3GPP system.

When a UE is powered on or enters a new cell, the UE performs initial cell search (S11). The initial cell search involves acquisition of synchronization to a BS. For this purpose, the UE receives a synchronization signal block (SSB) from the BS. The SSB includes a primary synchronization signal (PSS), a secondary synchronization signal (SSS), and a physical broadcast channel (PBCH). The UE synchronizes its timing to the BS and acquires information such as a cell identifier (ID) based on the PSS/SSS. Further, the LTE may acquire information broadcast in the cell by receiving the PBCH from the BS. During the initial cell search, the UE may also monitor a DL channel state by receiving a downlink reference signal (DL RS).

After the initial cell search, the LTE may acquire more detailed system information by receiving a physical downlink control channel (PDCCH) and a physical downlink shared channel (PDSCH) corresponding to the PDCCH (S12).

Subsequently, to complete connection to the BS, the UE may perform a random access procedure with the BS (S13 to S16). Specifically, the LTE may transmit a preamble on a physical random access channel (PRACH) (S13) and may receive a PDCCH and a random access response (RAR) for the preamble on a PDSCH corresponding to the PDCCH (S14). The UE may then transmit a physical uplink shared channel (PUSCH) by using scheduling information in the RAR (S15), and perform a contention resolution procedure including reception of a PDCCH and a PDSCH signal corresponding to the PDCCH (S16).

When the random access procedure is performed in two steps, steps S13 and S15 may be performed as one step (in which Message A is transmitted by the UE), and steps S14 and S16 may be performed as one step (in which Message B is transmitted by the BS).

After the above procedure, the UE may receive a PDCCH and/or a PDSCH from the BS (S17) and transmit a physical uplink shared channel (PUSCH) and/or a physical uplink control channel (PUCCH) to the BS (S18), in a general UL/DL signal transmission procedure. Control information that the LTE transmits to the BS is generically called uplink control information (UCI). The UCI includes a hybrid automatic repeat and request acknowledgement/negative acknowledgement (HARQ-ACK/NACK), a scheduling request (SR), channel state information (CSI), and so on. The CSI includes a channel quality indicator (CQI), a precoding matrix index (PMI), a rank indication (RI), and so on. In general, UCI is transmitted on a PUCCH. However, if control information and data should be transmitted simultaneously, the control information and the data may be transmitted on a PUSCH. In addition, the LTE may transmit the UCI aperiodically on the PUSCH, upon receipt of a request/command from a network.

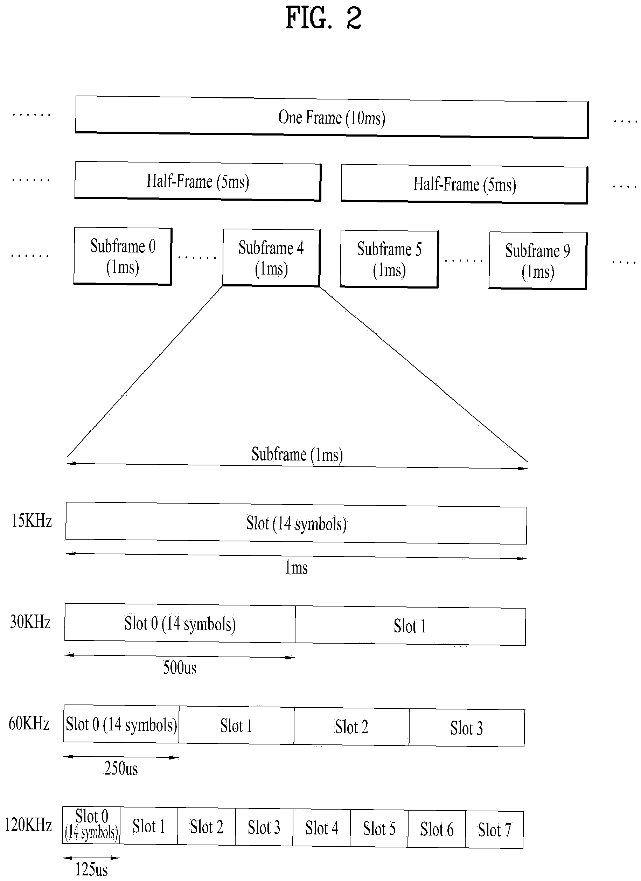

FIG. 2 illustrates a radio frame structure.

In NR, UL and DL transmissions are configured in frames. Each radio frame has a length of 10 ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | Nslotsymb | Nframe,uslot | Nsubframe,uslot |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |
| * Nslotsymb: number of symbols in a slot<br>* Nframe,uslot: number of slots in a frame<br>* Nsubframe,uslot: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | Nslotsymb | Nframe,uslot | Nsubframe,uslot |
|---|---|---|---|
| 60 kHz (u=2) | 12 | 40 | 4 |

The frame structure is merely an example, and the number of subframes, the number of slots, and the number of symbols in a frame may be changed in various manners. In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450 MHz - 7125 MHz | 15, 30, 60 kHz |

(continued)

| Frequency Range designation | Corresponding frequency range | Subcarrier Spacing |
| --- | --- | --- |
| FR2 | 24250 MHz - 52600 MHz | 60, 120, 240 kHz |

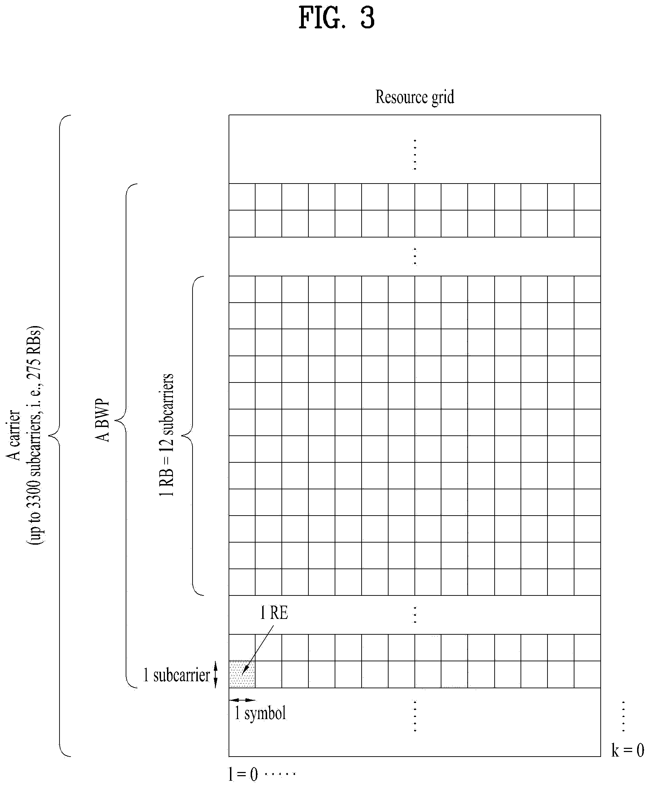

FIG. 3 illustrates a resource grid during the duration of one slot. A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

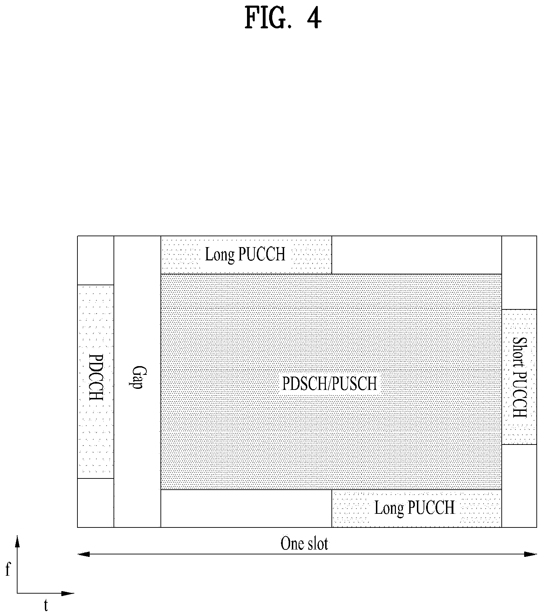

FIG. 4 illustrates exemplary mapping of physical channels in a slot.

A DL control channel, DL or UL data, and a UL control channel may all be included in one slot. For example, the first N symbols (hereinafter, referred to as a DL control region) in a slot may be used to transmit a DL control channel, and the last M symbols (hereinafter, referred to as a UL control region) in the slot may be used to transmit a UL control channel. N and M are integers equal to or greater than 0. A resource region (hereinafter, referred to as a data region) between the DL control region and the LTL control region may be used for DL data transmission or LTL data transmission. A time gap for DL-to-LTL or LTL-to-DL switching may be defined between a control region and the data region. A PDCCH may be transmitted in the DL control region, and a PDSCH may be transmitted in the DL data region. Some symbols at the time of switching from DL to UL in a slot may be configured as the time gap.

Now, a detailed description will be given of physical channels.

**DL Channel Structures**

An eNB transmits related signals on later-described DL channels to a UE, and the UE receives the related signals on the DL channels from the eNB.

(1) Physical Downlink Shared Channel (PDSCH)

The PDSCH carries DL data (e.g., a DL-shared channel transport block (DL-SCH TB)) and adopts a modulation scheme such as quadrature phase shift keying (QPSK), 16-ary quadrature amplitude modulation (16 QAM), 64-ary QAM (64 QAM), or 256-ary QAM (256 QAM). A TB is encoded to a codeword. The PDSCH may deliver up to two codewords. The codewords are individually subjected to scrambling and modulation mapping, and modulation symbols from each codeword are mapped to one or more layers. An OFDM signal is generated by mapping each layer together with a DMRS to resources, and transmitted through a corresponding antenna port.

(2) Physical Downlink Control Channel (PDCCH)

The PDCCH delivers DCI. For example, the PDCCH (i.e., DCI) may carry information about a transport format and resource allocation of a DL shared channel (DL-SCH), resource allocation information of an uplink shared channel (LTL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH uses a fixed modulation scheme (e.g., QPSK). One PDCCH includes 1, 2, 4, 8, or 16 control channel elements (CCEs) according to its aggregation level (AL). One CCE includes 6 resource element groups (REGs), each REG being defined by one OFDM symbol by one (P)RB.

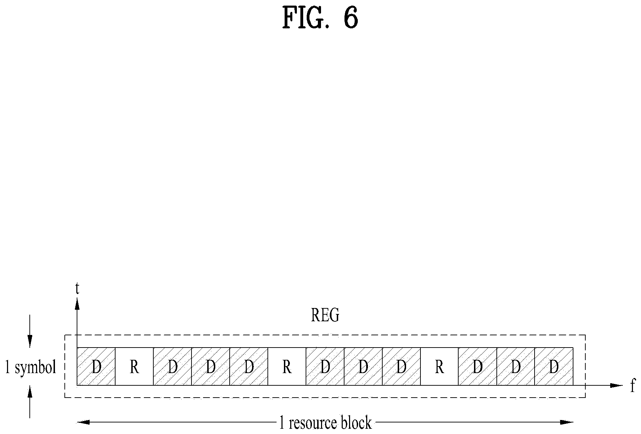

FIG. 6 illustrates an exemplary structure of one REG. In FIG. 6, D represents an RE to which DCI is mapped, and R represents an RE to which a DMRS is mapped. The DMRS is mapped to RE #1, RE #5, and RE #9 along the frequency direction in one symbol.

The PDCCH is transmitted in a control resource set (CORESET). The CORESET corresponds to a set of physical resources/parameters used to deliver the PDCCH/DCI in a BWP. For example, the CORESET is defined as a set of REGs with a given numerology (e.g., an SCS, a CP length, or the like). The CORESET may be configured by system information (e.g., a master information block (MIB)) or UE-specific higher-layer signaling (e.g., RRC signaling). For example, the following parameters/information may be used to configure a CORESET, and a plurality of CORESETs may overlap with each other in the time/frequency domain.

- controlResourceSetId: indicates the ID of a CORESET.
- frequencyDomainResources: indicates the frequency area resources of the CORESET. The frequency area resources are indicated by a bitmap, and each bit of the bitmap corresponds to an RB group (i.e., six consecutive RBs). For example, the most significant bit (MSB) of the bitmap corresponds to the first RB group of a BWP. An RB group corresponding to a bit set to 1 is allocated as frequency area resources of the CORESET.
- duration: indicates the time area resources of the CORESET. It indicates the number of consecutive OFDMA symbols in the CORESET. For example, the duration is set to one of 1 to 3.
- cce-REG-MappingType: indicates a CCE-to-REG mapping type. An interleaved type and a non-interleaved type are supported.
- precoderGranularity: indicates a precoder granularity in the frequency domain.
- tci-StatesPDCCH: provides information indicating a transmission configuration indication (TCI) state for the PDCCH (e.g., TCI-StateID). The TCI state is used to provide the quasi-co-location relation between DL RS(s) in an RS set (TCI-state) and PDCCH DMRS ports.
- tci-PresentInDCI: indicates whether a TCI field is included in DCI.
- pdcch-DMRS-ScramblingID: provides information used for initialization of a PDCCH DMRS scrambling sequence.

For each CORESET, a precoder granularity in the frequency domain is set to one of the followings by higher-layer signaling:

- sameAsREG-bundle: It equals to an REG bundle size in the frequency domain.
- allContiguousRBs: It equals to the number of contiguous RBs in the frequency domain within the CORESET.

The REGs of the CORESET are numbered in a time-first mapping manner. That is, the REGs are sequentially numbered in an ascending order, starting from 0 for the first OFDM symbol of the lowest-numbered RB in the CORESET.

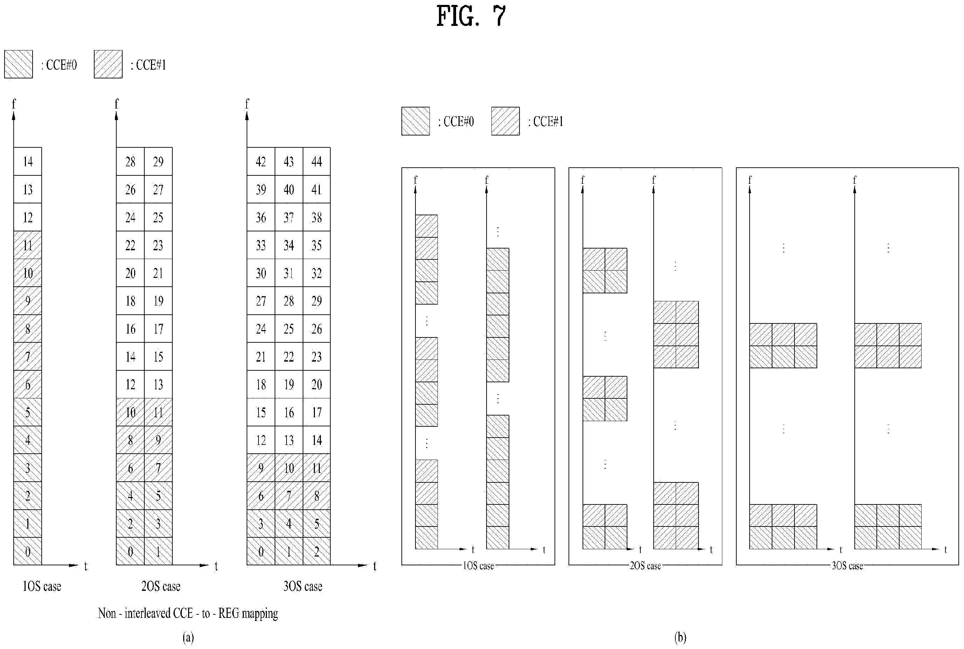

CCE-to-REG mapping for the CORESET may be an interleaved type or a non-interleaved type. FIG. 7(a) is an exemplary view illustrating non-interleaved CCE-REG mapping, and FIG. 7(b) is an exemplary view illustrating interleaved CCE-REG mapping.

- Non-interleaved CCE-to-REG mapping (or localized CCE-to-REG mapping): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved in the CORESET. In a CORESET including one or two OFDM symbols, an REG bundle includes 2 or 6 REGs, and in a CORESET including three OFDM symbols, an REG bundle includes 3 or 6 REGs. An REG bundle size is configured on a CORESET basis.

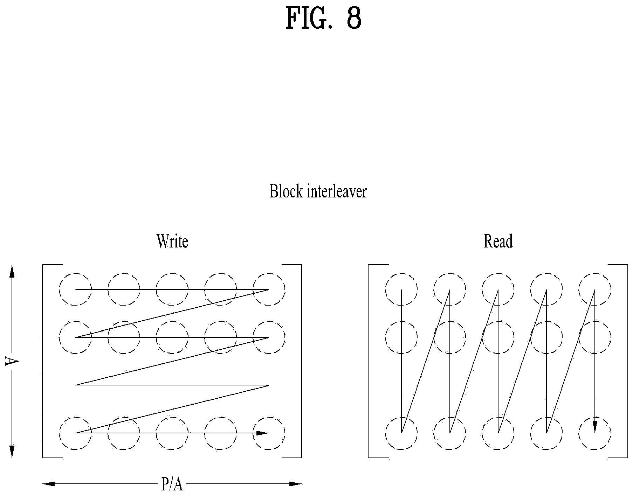

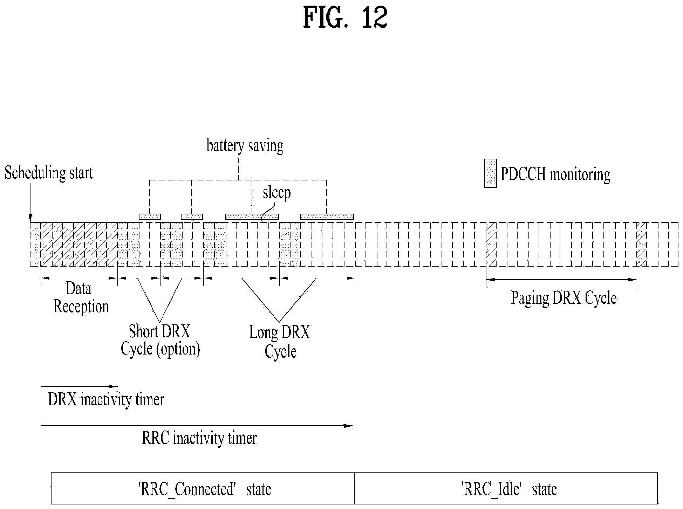

FIG. 8 illustrates an exemplary block interleaver. For the above interleaving operation, the number A of rows in a (block) interleaver is set to one or 2, 3, and 6. When the number of interleaving units for a given CORESET is P, the number of columns in the block interleaver is P/A. In the block interleaver, a write operation is performed in a row-first direction, and a read operation is performed in a column-first direction, as illustrated in FIG. 12. Cyclic shift (CS) of an interleaving unit is applied based on an ID which is configurable independently of a configurable ID for the DMRS.

To receive the PDCCH, the UE may monitor (e.g., blind-decode) a set of PDCCH candidates in the CORESET. The PDCCH candidates are CCE(s) that the UE monitors for PDCCH reception/detection. The PDCCH monitoring may be performed in one or more CORESETs in an active DL BWP on each active cell configured with PDCCH monitoring. A set of PDCCH candidates monitored by the UE is defined as a PDCCH search space (SS) set. The SS set may be a common search space (CSS) set or a UE-specific search space (USS) set.

Table 4 lists exemplary PDCCH SSs.

[Table 4]

| Type | Search Space | RNTI | Use Case |
|------|--------------|------|----------|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

The SS set may be configured by system information (e.g., MIB) or UE-specific higher-layer (e.g., RRC) signaling. S or fewer SS sets may be configured in each DL BWP of a serving cell. For example, the following parameters/information may be provided for each SS set. Each SS set may be associated with one CORESET, and each CORESET configuration may be associated with one or more SS sets. - searchSpaceId: indicates the ID of the SS set.

- controlResourceSetId: indicates a CORESET associated with the SS set.
- monitoringSlotPeriodicityAndOffset: indicates a PDCCH monitoring periodicity (in slots) and a PDCCH monitoring offset (in slots).
- monitoringSymbolsWithinSlot: indicates the first OFDMA symbol(s) for PDCCH monitoring in a slot configured with PDCCH monitoring. The OFDMA symbols are indicated by a bitmap and each bit of the bitmap corresponds to one OFDM symbol in the slot. The MSB of the bitmap corresponds to the first OFDM symbol of the slot. OFDMA symbol(s) corresponding to bit(s) set to 1 corresponds to the first symbol(s) of the CORESET in the slot.
- nrofCandidates: indicates the number of PDCCH candidates (e.g., one of 0, 1, 2, 3, 4, 5, 6, and 8) for each AL={1, 2, 4, 8, 16}.
- searchSpaceType: indicates whether the SS type is CSS or USS.
- DCI format: indicates the DCI format of PDCCH candidates.

The UE may monitor PDCCH candidates in one or more SS sets in a slot based on a CORESET/SS set configuration. An occasion (e.g., time/frequency resources) in which the PDCCH candidates should be monitored is defined as a PDCCH (monitoring) occasion. One or more PDCCH (monitoring) occasions may be configured in a slot.
Table 5 illustrates exemplary DCI formats transmitted on the PDCCH.

[Table 5]

| DCI format | Usage |
|------------|-------|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of LTEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a LTE, and DCI format 2_1 is used to deliver DL pre-emption information to a LTE. DCI format 2_0 and/or DCI format 2_1 may be delivered to a corresponding group of UEs on a group common PDCCH which is a PDCCH directed to a group of UEs. DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

**UL Channel Structures**

A UE transmits a related signal to the BS on a UL channel, which will be described later, and the BS receives the related signal from the UE through the UL channel to be described later.

(1) Physical Uplink Control Channel (PUCCH)

The PUCCH carries UCI, HARQ-ACK and/or scheduling request (SR), and is divided into a short PUCCH and a long PUCCH according to the PUCCH transmission length.
The UCI includes the following information.

- SR: information used to request UL-SCH resources.
- HARQ-ACK: a response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI: feedback information for a DL channel. Multiple input multiple output (MIMO)-related feedback information includes an RI and a PMI.

Table 6 illustrates exemplary PUCCH formats. PUCCH formats may be divided into short PUCCHs (Formats 0 and 2) and long PUCCHs (Formats 1, 3, and 4) based on PUCCH transmission durations.

[Table 6]

| PUCCH format | Length in OFDM symbols $N_{symb}^{PUCCI}$ | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the LTE transmits the PUCCH of PUCCH format 0 in PUCCH resources for a corresponding SR configuration. PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

(2) Physical Uplink Shared Channel (PUSCH)

The PUSCH carries LTL data (e.g., LTL-shared channel transport block (LTL-SCH TB)) and/or LTL control information (UCI), and is transmitted based a Cyclic Prefix-Orthogonal Frequency Division Multiplexing (CP-OFDM) waveform or a Discrete Fourier Transform-spread-Orthogonal Frequency Division Multiplexing (DFT-s-OFDM) waveform. When the PUSCH is transmitted based on the DFT-s-OFDM waveform, the UE transmits the PUSCH by applying transform precoding. For example, when transform precoding is not allowed (e.g., transform precoding is disabled), the UE may transmit the PUSCH based on the CP-OFDM waveform. When transform precoding is allowed (e.g., transform precoding is enabled), the UE may transmit the PUSCH based on the CP-OFDM waveform or the DFT-s-OFDM waveform. PUSCH transmission may be dynamically scheduled by the UL grant in the DCI or may be semi-statically scheduled based on higher layer (e.g., RRC) signaling (and/or Layer 1 (L1) signaling (e.g., PDCCH)) (configured grant). PUSCH transmission may be performed on a codebook basis or a non-codebook basis.

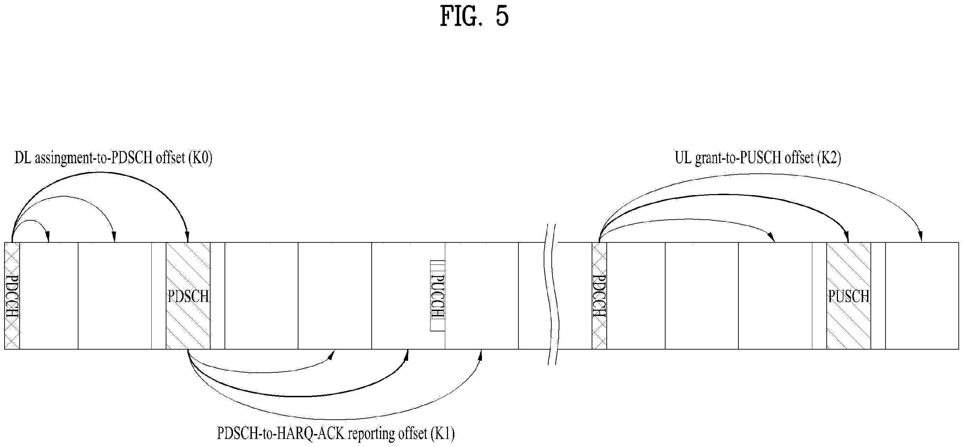

FIG. 5 is a diagram for explaining a HARQ-ACK transmission timing and a PUSCH transmission timing and assignment method.

HARQ-ACK is information indicating whether the UE has successfully received a physical DL channel. Upon successfully receiving the physical DL channel, the UE feeds back acknowledgement (ACK) to the BS and, otherwise, the UE feeds back negative ACK (NACK) to the BS. In NR, HARQ supports 1-bit HARQ-ACK feedback per transport block. FIG. 5 illustrates an example of a HARQ-ACK timing K1.

In FIG. 5, K0 represents the number of slots from a slot with a PDCCH carrying DL assignment (i.e., DL grant) to a slot with corresponding PDSCH transmission, K1 represents the number of slots from a slot with a PDSCH to a slot with corresponding HARQ-ACK transmission, and K2 represents the number of slots from a slot with a PDCCH carrying a LTL grant to a slot with corresponding PUSCH transmission. That is, K0, K1, and K2 may be briefly summarized as shown in Table 7 below.

[Table 7]

|    | A                 | B                                   |
|----|-------------------|-------------------------------------|
| K0 | DL scheduling DCI | Corresponding DL data transmission  |
| K1 | DL data reception | Corresponding HARQ-ACK              |
| K2 | UL scheduling DCI | Corresponding LTL data transmission |

The BS may provide a HARQ-ACK feedback timing to the UE dynamically by DCI or semi-statically by RRC signaling. The NR system supports different minimum HARQ processing times for UEs. A HARQ processing time includes delay between a DL data reception timing and a corresponding HARQ-ACK transmission timing and delay between a UL grant reception timing and a corresponding UL data transmission timing. The UE transmits information about the capability of a minimum HARQ processing time thereof to the BS. From the viewpoint of the UE, HARQ ACK/NACK feedback signals for a plurality of DL transmissions in the time domain may be transmitted in one LTL data/control region. A timing between DL data reception and corresponding ACK is indicated by the DCI.

Unlike the LTE system in which a transport block (TB)-based or codeword-based HARQ procedure is performed, the NR system supports code block group (CBG)-based transmission of single-bit/multi-bit HARQ-ACK feedback. A TB may be mapped to one or more code blocks (CBs) according to the size thereof. For example, in a channel coding procedure, a cyclic redundancy check (CRC) code is attached to the TB. If a CRC-attached TB is not larger than a certain size, the CRC-attached TB corresponds to one CB. However, if the CRC-attached TB is larger than the certain size, the CRC-attached TB is segmented into a plurality of CBs. In the NR system, the UE may be configured to receive CBG-based transmissions, and retransmission may be scheduled to carry a subset of all CBs of the TB.

Referring to FIG. 5, the UE may detect a PDCCH in slot #n. The PDCCH includes DL scheduling information (e.g., DCI format 1_0 and/or DCI format 1_1). The PDCCH indicates a DL assignment-to-PDSCH offset K0 and a PDSCH-to-HARQ-ACK reporting offset K1. DCI format 1_0 and DCI format 1_1 may include, for example, the following information.

- Frequency domain resource assignment: indicates an RB resource assigned to a PDSCH (e.g. one or more (dis)continuous RBs).
- Time domain resource assignment: indicates K0 and the starting position (e.g., OFDM symbol index) and length (e.g., the number of OFDM symbols) of a PDSCH in a slot.
- PDSCH-to-HARQ_feedback timing indicator: indicates K1.
- HARQ process number (4 bits): indicates a HARQ process identity (ID) for data (e.g., a PDSCH or a TB).
- PUCCH resource indicator (PRI): indicates a PUCCH resource to be used for UCI transmission among a plurality of PUCCH resources in a PUCCH resource set.

Next, the UE may receive a PDSCH in slot #(n+K0) according to scheduling information of slot #n and then transmit UCI on a PUCCH in slot #(n+K1). The UCI includes a HARQ-ACK response to the PDSCH. In the case in which the PDSCH is configured to carry a maximum of one TB, the HARQ-ACK response may be configured as one bit. In the case in which the PDSCH is configured to carry up to two TBs, the HARQ-ACK response may be configured as two bits if spatial bundling is not configured and as one bit if spatial bundling is configured. When slot #(n+K1) is designated as a HARQ-ACK transmission timing for a plurality of PDSCHs, UCI transmitted in slot #(n+K1) includes HARQ-ACK responses to the plurality of PDSCHs.

Referring to FIG. 5, the UE may detect a PDCCH in slot #n. The PDCCH includes UL scheduling information (e.g., DCI format 0_0 and/or DCI format 0_1). DCI format 0_0 and DCI format 0_1 may include the following information.

- Frequency domain resource assignment: indicates an RB set assigned to a PUSCH.
- Time domain resource assignment: indicates a slot offset K2 and the starting position (e.g., symbol index) and length (e.g., the number of OFDM symbols) of a PUSCH in a slot. The starting symbol and length may be indicated by a start and length indicator value (SLIV) or may be indicated individually.

Thereafter, the UE may transmit the PUSCH in slot #(n+k2) according to the scheduling information of slot #n. Here, the PUSCH includes a UL-SCH TB.

## Bandwidth Part (BWP)

The NR system may support up to 400 MHz per carrier. If a UE operating in such a wideband carrier always keeps a radio frequency (RF) module on for the whole carrier, the UE may suffer from great battery consumption. Considering multiple use cases (e.g., eMBB, URLLC, mMTC, V2X, etc.) in one wideband carrier, different numerologies (e.g., subcarrier spacings) may be supported for different frequency bands of the carrier. Each UE may have a different capability regarding a maximum bandwidth. In this regard, an eNB may indicate a UE to operate only in a part of the bandwidth of the wideband carrier, not across the total bandwidth. Such a partial bandwidth is referred to as a BWP. A BWP is a subset of contiguous common resource blocks defined for numerology $\mu i$ in BWP i in the frequency domain, and one numerology (e.g., subcarrier spacing, CP length, or slot/mini-slot duration) may be configured for the BWP.

The gNB may configure one or more BWPs in one carrier configured for the UE. If UEs are concentrated in a specific BWP, some UEs may be switched to another BWP, for load balancing. For frequency-domain inter-cell interference cancellation between adjacent cells, BWPs at both ends of the total bandwidth of a cell except for some center spectrum may be configured in the same slot. That is, the gNB may configure at least one DL/UL BWP for the UE associated with the wideband carrier, activate at least one of DL/LTL BWP(s) configured at a specific time (by L1 signaling which is a physical-layer control signal, a MAC control element (CE) which is a MAC-layer control signal, or RRC signaling), indicate the UE to switch to another configured DL/LTL BWP (by L1 signaling, a MAC CE, or RRC signaling), or set a timer value and switch the UE to a predetermined DL/LTL BWP upon expiration of the timer value. To indicate switching to another configured DL/UL BWP, DCI format 1_1 or DCI format 0_1 may be used. Particularly, an activated DL/LTL BWP is referred to as an active DL/LTL BWP. During initial access or before RRC connection setup, the UE may not receive a DL/LTL BWP configuration. A DL/UL BWP that the UE assumes in this situation is referred to as an initial active DL/LTL BWP.

A DL BWP is a BWP used to transmit and receive a DL signal such as a PDCCH and/or a PDSCH, and a UL BWP is a BWP used to transmit and receive a UL signal such as a PUCCH and/or a PUSCH.

**DRX (Discontinuous Reception) operation**

The UE uses Discontinuous Reception (DRX) in RRC_IDLE and RRC_INACTIVE state in order to reduce power consumption. When the DRX is configured, the LTE performs a DRX operation according to DRX configuration information.

When the UE operates based on the DRX, the UE repeats ON/OFF for reception. For example, when the DRX is configured, the UE attempts to receive/detect the PDCCH (e.g., PDCCH monitoring) only in a predetermined time interval (e.g., ON), and does not attempt to receive the PDCCH in the remaining time period (e.g., OFF/sleep).

At this time, a time period during which the UE should attempt to receive the PDCCH is referred to as an On-duration, and this on-duration is defined once per DRX cycle. The UE can receive DRX configuration information from a gNB through a RRC signaling and operate as the DRX through a reception of the (Long) DRX command MAC CE.

The DRX configuration information may be included in the MAC-CellGroupConfig. The IE MAC-CellGroupConfig is used to configure MAC parameters for a cell group, including DRX.

DRX (Discontinuous Reception) means an operation mode for enabling a UE (User Equipment) to reduce battery consumption so that the LTE can receive/monitor a downlink channel discontiguously. That is, a LTE configured with DRX can reduce power consumption by receiving a DL signal discontiguously. The DRX operation is performed in a DRX cycle indicative of a time interval in which On Duration is periodically repeated. The DRX cycle includes On Duration and sleep duration (or Opportunity for DRX). The On Duration indicates a time interval in which a UE monitors a PDCCH in order to receive the PDCCH. DRX may be performed in an RRC (Radio Resource Control)_IDLE state (or mode), an RRC_INACTIVE state (or mode), or an RRC_CONNECTED state (or mode). In the RRC_IDLE state and the RRC_INACTIVE state, DRX is used to receive a paging signal discontiguously.

- RRC_Idle state: state in which a radio connection (RRC connection) is not established between a base station and a LTE.
- RRC Inactive state: state in which a radio connection (RRC connection) has been established between a base station and a UE, but a radio connection is inactivated.
- RRC_Connected state: state in which a radio connection (RRC connection) has been established between a base station and a LTE.

DRX is basically divided into Idle mode DRX, Connected DRX (C-DRX) and extended DRX. DRX applied in the RRC IDLE state is called Idle mode DRX, and DRX applied in the RRC CONNECTED state is called Connected mode DRX (C-DRX).

eDRX (Extended/enhanced DRX) is a mechanism capable of expanding the cycle of Idle mode DRX and C-DRX. The eDRX may be mainly used for (large-scale) IoT applications. In the Idle mode DRX, whether to permit eDRX may be configured based on system information (e.g., SIB1).

The SIB 1 may include an eDRX-Allowed parameter. The eDRX-Allowed parameter is a parameter indicating whether Idle mode extended DRX is permitted.

**(1) IDLE Mode DRX**

In the IDLE mode, the UE may use DRX to reduce power consumption. One paging occasion (PO) may be a subframe in which a paging-radio network temporary identifier (P-RNTI) based physical downlink control channel (PDCCH) or MPDCCH (MTC PDCCH) or NPDCCH (Narrowband PDCCH) may be transmitted. The P-RNTI-based (M/N) PDCCH may address/schedule a paging message for NB-IoT. For P-RNTI-based MPDCCH transmission, the PO may indicate a first subframe for MPDCCH repetition.

For P-RNTI-based NPDCCH transmission, the PO may indicate a starting subframe for NPDCCH repetition. If the subframe determined by the PO is not a valid NB-IoT DL subframe, the first valid NB-IoT DL subframe after the PO may be the starting subframe for NPDCCH repetition.

One paging frame (PF) is one radio frame which may include one or a plurality of paging occasions. When DRX is used, a UE may be configured to monitor only one PO per DRX cycle. One paging narrowband (PNB) refers to one narrowband in which the UE performs reception/monitoring of paging messages. The PF, PO and/or PNB may be determined based on a DRX parameter provided via network signaling (e.g., system information).

Hereafter, 'PDCCH' may refer to MPDCCH, NPDCCH and/or normal PDCCH. Hereafter, 'UE' may refer to MTC UE, BL (Bandwidth reduced Low complexity)/CE (coverage enhanced) UE, NB-IoT UE, Reduced Capability (Red-Cap) LTE, normal LTE and/or IAB-MT (mobile termination).

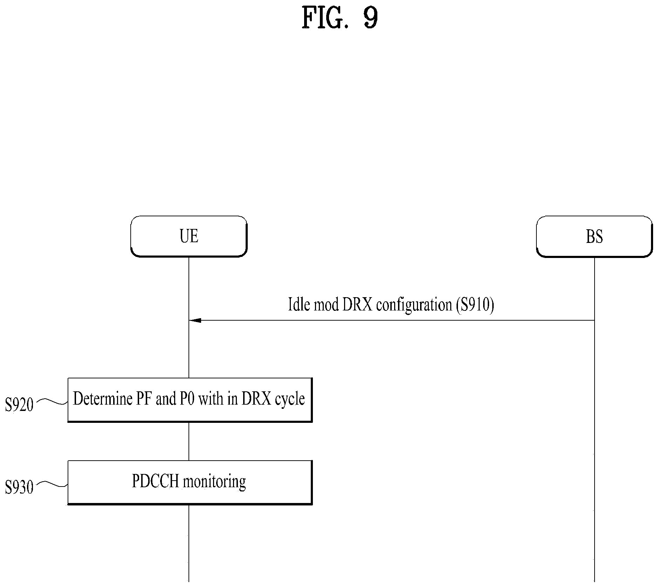

FIG. 9 is a flowchart showing an example of a method of performing an Idle mode DRX operation.

A LTE receives, from a base station, Idle mode DRX configuration information through a higher layer signaling (e.g., system information) (S910).

Furthermore, the LTE determines a PF (Paging Frame) and a PO (Paging Occasion), for monitoring a physical downlink control channel (e.g., PDCCH) in a paging DRX cycle based on the Idle mode DRX configuration information (S920). In this case, the DRX cycle includes On Duration and sleep duration (or Opportunity for DRX).

Furthermore, the UE monitors a PDCCH in the PO of the determined PF (S930). The UE monitors only one subframe (PO) for each paging DRX cycle.

Additionally, if the UE receives a PDCCH (more exactly, CRC of PDCCH) scrambled by a P-RNTI during On duration (i.e., if paging is detected), the UE may transit to a connected mode and transmit or receive data with the base station.

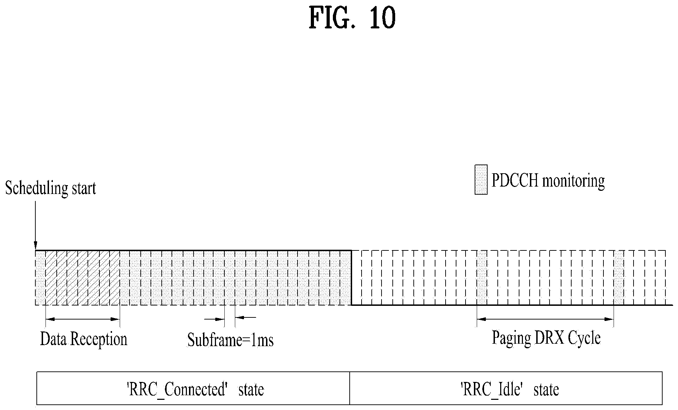

FIG. 10 is a diagram showing an example of an Idle mode DRX operation.

Referring to FIG. 10, if there is a traffic (data) toward a UE in the RRC_Idle state (hereinafter referred to as 'Idle state'), paging occurs toward the corresponding LTE.

Thus, the UE wakes up every (paging) DRX cycle and monitors a PDCCH.

If Paging is present, the UE transits to a Connected state, and receives data. Otherwise, the UE may enter a sleep mode again.

**(2) Connected Mode DRX (C-DRX)**

C-DRX is DRX applied in the RRC Connected state. The DRX cycle of C-DRX may be configured with a Short DRX cycle and/or a Long DRX cycle. The Short DRX cycle is Optional.

If C-DRX is configured, a UE performs PDCCH monitoring for On Duration. If there is a PDCCH successfully detected during the PDCCH monitoring, the LTE operates (or runs) an inactivity timer and maintains an awake state. In contrast, if there is no PDCCH successfully detected during the PDCCH monitoring, the UE enters to a sleep state after the On Duration is ended.

If C-DRX is configured, a PDCCH reception occasion (e.g., a slot having a PDCCH search space/candidate) may be configured discontiguously based on a C-DRX configuration. In contrast, if C-DRX is not configured, a PDCCH reception occasion (e.g., a slot having a PDCCH search space/candidate) may be configured contiguously in accordance with PDCCH search space configuration. Meanwhile, PDCCH monitoring may be limited in a time interval configured as a measurement gap, regardless of a C-DRX configuration.

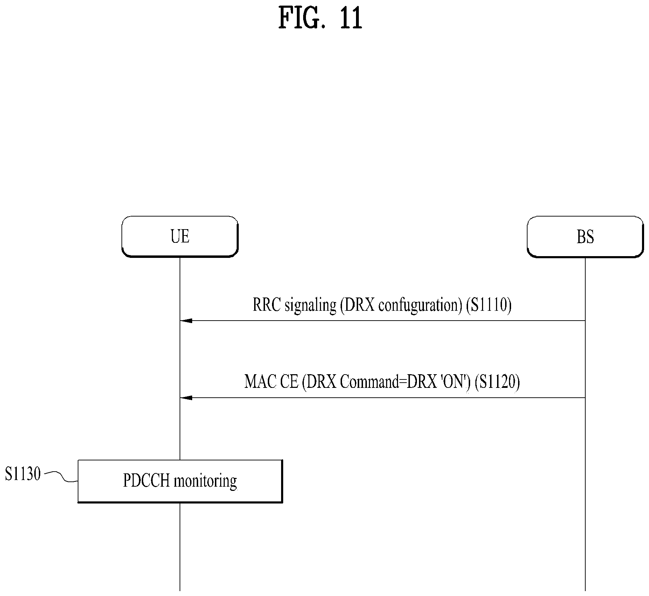

FIG. 11 is a flowchart showing an example of a method of performing a C-DRX operation.

A LTE receives, from a base station, RRC signalling (e.g., MAC-MainConfig IE) including DRX configuration information (S 1110). The DRX configuration information may include the following information.

- on-duration: the duration that the UE waits for, after waking up, to receive PDCCHs. If the UE successfully decodes a PDCCH, the UE stays awake and starts the drx-inactivity timer;
- onDurationTimer: the duration in which the DRX cycle starts. For example, the duration may refer to the number of PDCCH monitoring subframe to be continuously monitored at the beginning of a DRX cycle.
- drx-InactivityTimer: the duration after the PDCCH occasion in which a PDCCH indicates a new UL or DL transmission for the MAC entity. For example, the duration may be the number of subframes after the UE decodes the PDCCH including scheduling information. That is, the duration refers to a duration in which the UE waits to successfully decode another PDCCH after decoding the PDCCH. If no other PDCCHs are detected within the corresponding duration, the UE transitions to the sleep mode.

The UE restarts the drx-inactivity timer after successfully decoding a PDCCH for initial transmission only except for a PDCCH for retransmission.

- drx-RetransmissionTimer: for DL, the maximum duration until a DL retransmission is received; for LTL the maximum duration until a grant for UL retransmission is received. For example, it may indicate the number of PDCCH subframes to be continuously monitored when HARQ retransmission is expected.
- longDRX-Cycle: On Duration occurrence period
- drxStartOffset: a subframe number in which a DRX cycle is started
- drxShortCycleTimer: the duration the UE shall follow the Short DRX cycle;
- shortDRX-Cycle: a DRX Cycle operating as much as a drxShortCycleTimer number when Drx-InactivityTimer is terminated
- Active time: total duration that the UE monitors PDCCH, which may include (a) the "on-duration" of the DRX cycle, (b) the time UE is performing continuous reception while the drx-inactivity timer has not expired, and (c) the time when the LTE is performing continuous reception while waiting for a retransmission opportunity.

Specifically, when the DRX cycle is configured, an active time for a serving cell of a DRX group includes the following.

- (a) drx-onDurationTimer or (b) drx-InactivityTimer configured for the DRX group is running; or
- (c) drx-RetransmissionTimerDL or drx-RetransmissionTimerUL is running on any Serving Cell in the DRX group; or
- (d) ra-ContentionResolutionTimer or msgB-ResponseWindow is running; or
- (e) a Scheduling Request is sent on PUCCH and is pending; or
- (f) a PDCCH indicating a new transmission addressed to the C-RNTI of the MAC entity has not been received after successful reception of a Random Access Response for the Random Access Preamble not selected by the MAC entity among the contention-based Random Access Preamble.

Furthermore, if DRX 'ON' is configured through the DRX command of a MAC CE (command element) (S 1120), the UE monitors a PDCCH for the ON duration of a DRX cycle based on the DRX configuration (S1130).

FIG. 12 is a diagram showing an example of a C-DRX operation.

Referring to FIG. 12, when the UE receives scheduling information (e.g., DL assignment or UL grant) in the RRC_Connected state (hereinafter referred to as the connected state), the UE runs a DRX inactivity timer and an RRC inactivity timer.

After the DRX inactivity timer expires, a DRX mode starts. The UE wakes up in a DRX cycle and monitors a PDCCH during a predetermined time (on duration timer).

In this case, if Short DRX is configured, when the UE starts the DRX mode, the UE first starts in a short DRX cycle, and starts to a long DRX cycle after the short DRX cycle is terminated. The Long DRX cycle is a multiple of the short DRX cycle. In the short DRX cycle, the LTE wakes up more frequently. After the RRC inactivity timer expires, the LTE shifts to an Idle state and performs an Idle mode DRX operation.

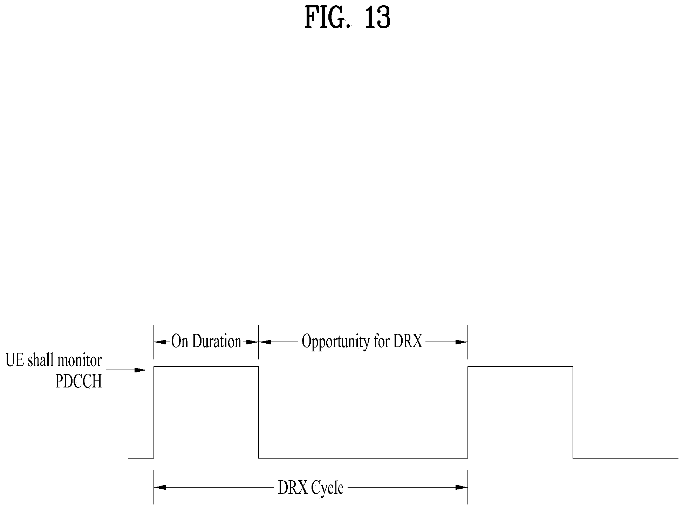

FIG. 13 illustrates a DRX cycle. The C-DRX operation has been introduced for power saving of the UE. If the UE receives no PDCCH within the on-duration defined for each DRX cycle, the LTE enters the sleep mode until the next DRX cycle and does not perform transmission/reception.

On the other hand, when the UE receives a PDCCH within the on-duration, the active time may continue (or increase) based on the operations of an inactivity timer, a retransmission timer, etc. If the UE receives no additional data within the active time, the UE may operate in the sleep mode until the next DRX operation.

In NR, a wake-up signal (WUS) has been introduced to obtain additional power saving gain in addition to the existing C-DRX operation. The WUS may be to inform whether the UE needs to perform PDCCH monitoring within the on-duration of each DRX cycle (or a plurality of DRX cycles). If the UE detects no WUS on a specified or indicated WUS occasion, the UE may maintain the sleep mode without performing PDCCH monitoring in one or more DRX cycles associated with the corresponding WUS.

The present disclosure proposes methods for the LTE to perform PDCCH monitoring within a DRX active time based on DCI when the UE is configured with DRX operation. The UE may be configured with up to 10 SS sets for each BWP. In addition, the LTE may monitor PDCCH candidates included in SS sets (hereinafter referred to as SS set monitoring).

Since the UE needs to perform blind decoding (BD) on a PDCCH whose reception time and DCI format are unknown, the UE may consume a lot of power for the PDCCH monitoring during the DRX operation.

As technologies for power saving in future wireless communication systems (e.g., Rel-17 NR systems, etc.), various methods related to PDCCH monitoring adaptation may be used to allow the LTE to reduce power consumption within the DRX active time. For example, various methods such as SS set adaptation, PDCCH monitoring skipping, dynamic CORESET on/off (e.g., PDCCH or MAC CE), and/or adaptation of a blind detection (BD)/CCE limit may be used.

The blind decoding (BD) limit may mean the number of PDCCH candidates (e.g., the number of times of BD) that the UE should monitor during a time unit. The CCE limit may be associated with channel estimation capability required for PDCCH detection at the UE. The CCE limit may be determined based on the number of non-overlapping CCEs. On the other hand, when the UE is configured with the DRX operation, if the UE is instructed to perform the PDCCH monitoring adaptation within the DRX active time, there may be many benefits to the power consumption of the UE. To this end, the BS may provide information on the PDCCH monitoring adaptation to the UE based on various DCI formats of Rel-16.

In embodiments of the present disclosure, there are proposed PDCCH monitoring adaptation methods (or schemes), which may be indicated in DCI. To this end, the present disclosure defines default SS set(s) in which the UE performs PDCCH monitoring regardless of the indication of the PDCCH monitoring adaptation even when PDCCH monitoring adaptation is indicated.

In addition, operations for the UE and/or BS to prepare for error cases related to the PDCCH monitoring adaptation are also defined. The PDCCH monitoring adaptation according to the present disclosure is not limited to DCI, and various PDCCH monitoring adaptation triggering and/or indication methods may be used. In this case, the above-described PDCCH monitoring adaptation may be explicitly and/or implicitly triggered and/or indicated.

For example, a PDCCH monitoring adaptation method (e.g., PDCCH monitoring adaptation triggering conditions and/or combinations thereof) based on at least one timer (e.g., timer(s) configured for the DRX operation or timer(s) newly defined for the DRX operation) is proposed. In addition, the present disclosure describes DCI formats capable of indicating the above-described methods.

For convenience of description, existing PDCCH monitoring to which no PDCCH monitoring adaptation is applied may be referred to as a first PDCCH monitoring method, and new PDCCH monitoring to which PDCCH monitoring adaptation is applied may be referred to as a second PDCCH monitoring method.

However, if people skilled in the art are capable of clearly understanding the meaning without confusion between the two methods, the expressions of "first and second" may be omitted. For example, PDCCH monitoring may refer to one of the first and second PDCCH monitoring methods depending on the context or may mean both the first and second PDCCH monitoring methods.

In the following description, classification of embodiments, methods, or options is intended to clarify the description, and the classification is not limitedly interpreted to mean that each should be practiced independently. For example, although each of the embodiments/methods/options described below may be independently implemented, but at least some of the embodiments/methods/options may be combined to the extent that they do not conflict with each other.

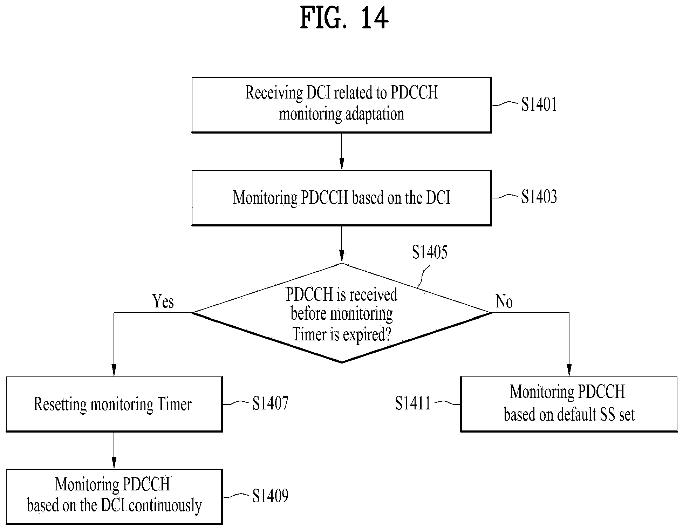

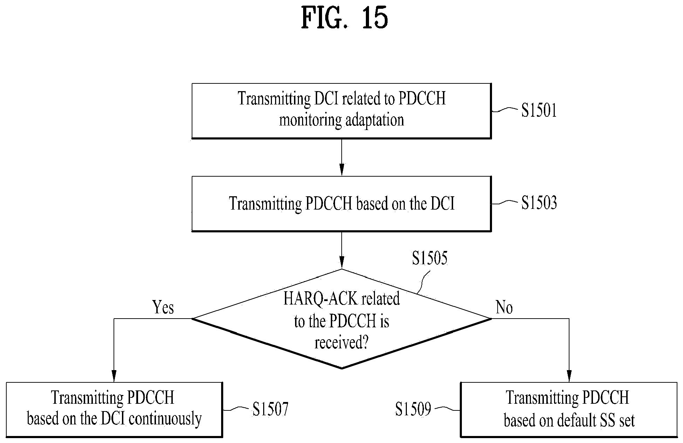

FIGS. 14 and 15 are diagrams for explaining overall operation processes of a LTE and a BS according to embodiments of the present disclosure.

FIG. 14 is a diagram for explaining the overall operation process of the UE according to embodiments of the present disclosure.

Referring to FIG. 14, the LTE may receive DCI related to PDCCH monitoring adaptation from the BS (S1401). In this case, specific methods for the UE to receive the DCI may be based on [Embodiment 4].

The UE may monitor a PDCCH within a DRX active time based on the DCI (S1403). In this case, specific methods of monitoring the PDCCH may be based on [Embodiment 1], [Embodiment 3], [Embodiment 5], and/or [Embodiment 6].

The UE may operate a monitoring timer while monitoring the PDCCH within the DRX active time (S1405). If the UE receives the PDCCH before the monitoring timer expires, the UE may reset the monitoring timer again (S1407) and continuously monitor the PDCCH based on the received DCI (S1409).

If the UE fails to receive the PDCCH until the monitoring timer expires, the UE may perform the PDCCH monitoring based on a default SS set (S1411).

Specific operations of the LTE according to S1405 to S1411 may be based on [Embodiment 2].

FIG. 15 is a diagram for explaining the overall operation process of the BS according to embodiments of the present disclosure.

Referring to FIG. 15, the BS may transmit DCI related to PDCCH monitoring adaptation to the LTE (S1501). In this case, specific methods for the BS to transmit the DCI to the UE may be based on [Embodiment 4].

The BS may transmit a PDCCH to the UE based on the DCI (S1503). In this case, specific methods for the BS to transmit the PDCCH to the UE may be based on [Embodiment 1], [Embodiment 3], [Embodiment 5] and/or [Embodiment 6].

Although the BS transmits the PDCCH, the BS may fail to receive the HARQ-ACK for a PDSCH scheduled by the corresponding PDCCH (S1505). If the BS receives the HARQ-ACK from the UE, the BS may continuously transmit the PDCCH to the UE based on the DCI (S1507).

However, if the BS receives no HARQ-ACK from the UE, the BS may transmit the PDCCH to the UE in a default SS set (S1509).

Specific operations of the BS according to S1505 to S1509 may be based on [Embodiment 2].

Before describing embodiments according to the present disclosure, the configuration of a default SS set used in embodiments of the present disclosure will be described.

**Default SS Set Configuration**

In embodiments of the present disclosure, there are proposed PDCCH monitoring adaptation techniques for reducing the overhead of PDCCH monitoring. In PDCCH monitoring adaptation according to embodiments of the present disclosure, the number of PDCCH candidates to be monitored by the UE may be reduced.

In addition, a default SS set for the PDCCH monitoring adaptation is defined in embodiments of the present disclosure. According to embodiments of the present disclosure, the default SS set may be defined as follows.

(i) The default SS set may be an SS set always monitored by the LTE in preparation for various error cases or an SS set monitored by the UE at the occurrence of an error case. That is, the default SS set may mean an SS set to which the PDCCH monitoring adaptation is not applied.
(ii) The default SS set may refer to an SS set to which the UE returns to perform the PDCCH monitoring again when the BS transmits no signals for a predetermined period of time and/or a predetermined number of times after configuring the PDCCH monitoring adaptation, for example, when the LTE receives no DL scheduling and/or data signals from the BS for a predetermined period of time and/or a period of time number of times.

(iii) The default SS set may mean an SS set that the UE monitors while starting the DRX active time when the LTE performs the PDCCH monitoring adaptation simultaneously with the start of the DRX active time.

On the other hand, in the following embodiments, when SS set monitoring adaptation is indicated/configured during the RRC configuration between BS and UE, SS sets determined not to be monitored by the UE (e.g., SS sets where all or part of BD of PDCCH candidates in the corresponding SS sets is omitted) may be selected in ascending order of SS set related priorities.

That is, when the UE is instructed to perform the PDCCH monitoring adaptation and thus configured not to monitor one of two SS sets, an SS set configured to have a 'higher priority' or 'priority' among the two SS sets may mean an SS set continuously monitored by the UE.

Accordingly, the priorities of SS sets may be configured to define the default SS set as described above. In TS 38.213, the types of SS sets are defined as in Table 8 below.

[Table 8]

| A set of PDCCH candidates for a UE to monitor is defined in terms of PDCCH search space sets. A search space set can be a CSS set or a USS set. A LTE monitors PDCCH candidates in one or more of the following search spaces sets |
| --- |
| - a Type0-PDCCH CSS set configured by pdcch-ConfigSIB 1 in MIB or by searchSpaceSIB 1 in PDCCH-ConfigCommon or by searchSpaceZero in PDCCH-ConfigCommon for a DCI format with CRC scrambled by a SI-RNTI on the primary cell of the MCG |
| - a TypeOA-PDCCH CSS set configured by searchSpaceOtherSystemInformation in PDCCH-ConfigCommon for a DCI format with CRC scrambled by a SI-RNTI on the primary cell of the MCG |
| - a Type1-PDCCH CSS set configured by ra-SearchSpace in PDCCH-ConfigCommon for a DCI format with CRC scrambled by a RA-RNTI, a MsgB-RNTI, or a TC-RNTI on the primary cell |
| - a Type2-PDCCH CSS set configured by paging Search Space in PDCCH-ConfigCommon for a DCI format with CRC scrambled by a P-RNTI on the primary cell of the MCG |
| - a Type3-PDCCH CSS set configured by SearchSpace in PDCCH-Config with searchSpaceType = common for DCI formats with CRC scrambled by INT-RNTI, SFI-RNTI, TPC-PUSCH-RNTI, TPC-PUCCH-RNTI, TPC-SRS-RNTI, CI-RNTI, or PS-RNTI and, only for the primary cell, C-RNTI, MCS-C-RNTI, or CS-RNTI(s), and |
| - a USS set configured by SearchSpace in PDCCH-Config with searchSpaceType = ue-Specific for DCI formats with CRC scrambled by C-RNTI, MCS-C-RNTI, SP-CSI-RNTI, CS-RNTI(s), SL-RNTI, SL-CS-RNTI, or SL-L-CS-RNTI. |

According to Table 8 above, the use of each CSS may be classified as follows.

- Type0-PDCCH CSS: An SS set for initial access
- Type0A-PDCCH CSS: An SS set for receiving additional system information (on-demand system information (OSI) at the request of the UE
- Type1-PDCCH CSS: An SS set for receiving a response from the network at the request of the UE during random access
- Type2-PDCCH CSS: An SS set for a system information change (paging) or a public warning system (PWS) indication
- Type3-PDCCH CSS: An SS set for PDCCHs except for Type0-PDCCH to Type2-PDCCH

For example, the UE may not need to monitor all of the TypeOA-PDCCH CSS and Type1-PDCCH CSS required at the request of the UE, the Type0-PDCCH CSS for initial access of the UE before RRC_CONNECTED mode, and other Type3-PDCCH CSSs within the DRX active time.

For the Type2-PDCCH CSS for performing paging, the LTE may be configured to receive paging information only on one PO among POs over a predetermined period of time, instead of receiving and/or monitoring the paging information at every PO on which the paging information is transmitted. For example, the UE may not regard the Type2-PDCCH CSS as an SS set that the UE needs to always monitor. That is, even if not explicitly specified, the UE may expect to receive the paging information in the Type2-PDCCH CSS at a predetermined cycle or receive the paging information on least k POs at every N POs.

In embodiments of the present disclosure, at least one USS may be configured to have high priorities. The Type3-PDCCH CSS and USSs not set to the high priorities may be configured to have medium priorities. The remaining CSSs except for the Type2-PDCCH CSS may be configured to have low priorities. In addition, at least one USS capable of receiving scheduling DCI may be set as default SS set(s).

For example, when the LTE is configured with the PDCCH monitoring adaptation, and when the LTE determine SS sets not to be monitored, the LTE may determine the SS sets not to be monitored in ascending order of the priorities.

If a USS and a CSS have the same defined priority, the LTE may monitor the USS prior to the CSS. In addition, when a USS and a USS have the same priority or when CSSs have the same priority, the UE may monitor an SS set having a low SS set ID first.

Hereinafter, embodiments of the present disclosure will be described based on the above-described default SS set configuration. In the following embodiments, the default SS set may follow the above definition.

## 1. Embodiment 1: Signaling of information on PDCCH monitoring adaptation method (or scheme) based on DCI (or UE and/or BS operations based on DCI) (hereinafter referred to as DCI-based PDCCH monitoring adaptation)

### (1) Embodiment 1-1: SS set level activation/deactivation

Embodiment 1-1 may be related to a method of activating/deactivating each of up to 10 SS sets that may be configured to the UE at the level of one SS set. The SS set may be identified by each SS set ID.

Whether the UE monitors the SS set may be determined based on the SS set ID. For example, when 10 SS set IDs from SS set IDs 0 to 9 are configured, the UE may be instructed/configured to monitor only SS sets having SS set IDs 0, 1, 2, and 3.

The BS may indicate the SS set ID to the UE in various ways. For example, the BS may indicate ON/OFF through a bitmap as in SCell dormancy indication bits of a wake up signal (WUS). For example, ON/OFF of each SS set may be indicated in DCI, but in this case, the usage of DCI bits may increase.

Herein, ON/OFF of the SS set may be interpreted as follows. When DCI has 10 bits for indicating SS set monitoring, when each of the 10 bits is associated with each SS set, when a specific bit is '1' (or '0'), and when an SS set corresponding to the specific bit is 'ON', the UE may be instructed to monitor the corresponding SS set.

In contrast, when the specific bit has a value of '0' (or '1'), and when the SS set corresponding to the specific bit is 'OFF', the UE may not perform monitoring for the corresponding SS set.

The number of SS sets to be monitored by the UE may increase or decrease according to predetermined rules of other methods rather than the above-described method. For example, during the RRC connection, the BS may configure default SS set(s) and/or adaptation to the UE. The BS may configure at least one USS among the USSs of the UE as the default SS set(s) and indicate two cases (increasing the number of SS sets to be monitored by the LTE/monitoring only the default SS set(s)) based on one bit of DCI. In other words, if the value of the one bit of the DCI is '1' (or '0'), the UE may add SS sets to be monitored one by one from the lowest priority. If the value of the one bit of the DCI is '0' (or '1'), the UE may monitor only the default SS set(s).

For the one bit of the DCI for indicating the SS sets to be monitored, a new field may be used. Alternatively, reserved bits or reserved states of an existing field may be used.

The above-described RRC configuration may be applied when the LTE monitors a minimum number of SS sets (i.e., default SS set(s)) simultaneously with the start of the DRX active time, and increases the number of SS sets to be monitored based on DCI.

As another example, (decreasing the number of SS sets to be monitored/monitoring all SS sets) may be indicated by one bit of DCI. For example, if the value of the one bit of the DCI is '1' (or '0'), the UE may decrease SS sets to be monitored by one from the lowest priority. In addition, if the value of the one bit of the DCI is '0' (or '1'), the UE may monitor all SS sets in a BWP in which the corresponding UE operates.

In the above configuration, the UE may monitor all SS sets simultaneously with the start of the DRX active time and reduce the number of SS sets to be monitored based on DCI.

In the above example, if two bits of DCI are used to inform the UE of SS sets to be monitored, the BS may indicate to the LTE more detailed operations (maintaining the number of SS sets to be monitored/increasing the number of SS sets to be monitored/decreasing the number of SS sets to be monitored/monitoring only default SS set(s)).

As another example, when two bits of DCI are used to inform the UE of SS sets to be monitored, the BS may indicate to the LTE any one of the following four states (monitoring all SS sets/increasing the number of SS sets to be monitored/decreasing the number of SS sets to be monitored/monitoring only default SS set(s)).

On the other hand, if more than two bits of DCI are used to indicate SS set monitoring, the number of cases for indicating SS sets to be monitored may vary depending on the number of bits.

In addition, if the UE fails to detect DCI for a predetermined period of time, the UE may be configured to monitor only default SS set(s), and thus, the power consumption of the UE may be reduced.

**(2) Embodiment 1-2: SS set group switching**

SS set group switching has been newly defined in Rel-16. In the SS set group switching, SS sets may be divided into groups, and it may be indicated whether the LTE performs monitoring at the level of SS set groups.

The SS set group switching may also be used for DCI-based PDCCH monitoring adaptation within the DRX active time. Specifically, during the RRC configuration, the BS may configure the number and indices of SS set groups to the LTE. The number of SS set groups may be determined according to the length of DCI bits indicating the PDCCH monitoring adaptation.

For example, if one bit of DCI is used to indicate the PDCCH monitoring adaptation, USSs with high priorities may be set to SS set group #0, and other SS sets may be set to SS set group #1. In this case, if the bit value is '0' (or '1'), it may indicate monitoring SS set group #0. If the bit value is '1' (or '0'), it may indicate monitoring SS set group #1. As another example, if the value of the one bit is toggled compared to the value of the one bit in the previous DCI, it may indicate monitoring by switching to another SS set group other than the currently monitored SS set group.

On the other hand, if the value of the one bit is not toggled compared to the value of the one bit in the previous DCI, it may indicate continuously monitoring the currently monitored SS set group without switching.

Therefore, when the UE is instructed to monitor SS set group #0, it may be understood that the UE operates in power saving mode.

As another example, when two bits of DCI are to indicate the PDCCH monitoring adaptation, SS sets with high, medium, and low priorities may be set to SS set groups #0, #1, and #2, respectively, and all SS sets including SS set groups #0, #1, and #2 or SS sets except for SS set groups #0, #1, and #2 may be set as SS set group #3. In this case, each of the four SS set groups (e.g., SS set groups #0, #1, #2, and #3) may be mapped to each of the four states that may be expressed with the two bits, and SS set groups to be monitored by the UE may be indicated depending on the value of the two bits.

In addition, the method of configuring SS set groups and the method of indicating SS set groups to be monitored may be configured in various ways depending on the bit length used for the SS. That is, the methods may not be particularly limited.

Instead of exclusively configuring SS set groups, an SS set group with a high index may be configured to be included in an SS set group with a low index. That is, some or all of SS sets included between SS set groups may overlap with each other.

For example, SS set group #0 may be configured to include only default SS set(s), and SS set group #1 may be configured to include all SS sets with high priorities. In addition, SS set group #2 may be configured to include SS sets with high priorities and SS sets with medium priorities, and SS set group #3 may be configured to include all SS sets. In this case, the power consumption of the UE may increase as the index of the SS set group increases. That is, the classification of SS set groups may be regarded as one step of the power saving mode.

For example, in power saving mode #0, the UE may monitor only the default SS set(s) according to SS set group #0 so that the UE may consume minimal power. In power saving mode #3, the UE may monitor all SS sets according to SS set group #3 so that the UE may consume the most power. Power saving mode #1 and power saving mode #2 respectively corresponding to SS set group #1 and SS set group #2 may be steps between power saving mode #0 and power saving mode #3, which may consume more power than power saving mode #0 and less power than power saving mode #3.

In Embodiments 1-1 and 1-2, the UE may require a switching gap. Herein, the switching gap may mean a time interval required for the LTE to apply SS set group switching after receiving an instruction of the SS set group switching.

The switching gap may be determined based on the processing time of DCI indicating SS set monitoring adaptation. In this case, the switching gap may be interpreted as including a time required for the UE to decode the DCI and change SS sets to be monitored.

**(3) Embodiment 1-3: PDCCH monitoring skipping**

Embodiment 1-3 may be related to a method by which when the UE is indicated with PDCCH monitoring adaptation in DCI, the UE stops PDCCH monitoring for a specific period of time and enters micro-sleep mode to reduce the power consumption.

The time (e.g., micro-sleep time) for which the LTE stops the PDCCH monitoring may be configured by an RRC configuration. For example, a plurality of times for which the monitoring is stopped (e.g., candidates micro-sleep times capable of being indicated by DCI) may be configured in consideration of the DRX cycle of the UE, and then one of the plurality of times for which the monitoring is stopped may be indicated by actual DCI reception.

That is, if the BS transmits information and/or signals to the UE while the UE is in the sleep mode, that is, while the UE stops the PDCCH monitoring for all or some SS sets, the UE may not receive the information, and thus, the BS may configure the sleep time of the UE in consideration of the failure. Alternatively, the UE may be configured to monitor at least default SS set(s) so that the UE may receive the information and/or signals, which are transmitted by the BS, even in the sleep mode

For example, if the UE is configured to always monitor the default SS set(s), the sleep mode may be configured to end when DCI is detected in the default SS set(s). In other words, if the UE receives the DCI indicating the PDCCH monitoring adaptation after entering the sleep mode, the UE may end the sleep mode upon detecting the DCI in the default SS set. In this case, the DCI for ending the sleep mode may be DCI for instructing to end the sleep mode based on a specific format. The UE may end the sleep mode regardless of the format as long as the UE receives the DCI in the default SS set.

In addition, when the sleep mode ends, the LTE may monitor all SS sets, monitor an SS set that the UE was monitoring before entering the sleep mode, or monitor an SS set indicated in the DCI indicating the end of the sleep mode.

Embodiment 1-1 and/or Embodiment 1-2 may be performed in combination with Embodiment 1-3 according to the configurations of Embodiment 1-1 and/or Embodiment 1-2.

### (4) Embodiment 1-4: PDCCH monitoring adaptation based on DCI format 2_6

According to power saving technologies of the Rel-16 NR system, when DRX operation is performed, whether the UE wakes up every DRX cycle may be notified to the UE based on DCI format 2_6. Table 9 shows DCI format 2_6 defined in TS 38.212.

[Table 9]

| |
|---|
| 7.3.1.3.7 Format 2_6 |
| DCI format 2_6 is used for notifying the power saving information outside DRX Active Time for one or more UEs. The following information is transmitted by means of the DCI format 2_6 with CRC scrambled by PS-RNTI:<br>- block number 1, block number 2,..., block number N where the starting position of a block is determined by the parameter ps-PositionDCI-2-6 provided by higher layers for the LTE configured with the block. If the UE is configured with higher layer parameter PS-RNTI and dci-Format2-6, one block is configured for the UE by higher layers, with the following fields defined for the block:<br>- Wake-up indication - 1 bit<br>- SCell dormancy indication - 0 bit if higher layer parameter Scell-groups-for-dormancy-outside-active-time is not configured; otherwise 1, 2, 3, 4 or 5 bits bitmap determined according to higher layer parameter Scell-groups-for-dormancy-outside-active-time, where each bit corresponds to one of the SCell group(s) configured by higher layers parameter Scell-groups-for-dormancy-outside-active-time, with MSB to LSB of the bitmap corresponding to the first to last configured SCell group.<br>The size of DCI format 2_6 is indicated by the higher layer parameter sizeDCI-2-6, according to Clause 10.3 of TS 38.213. |

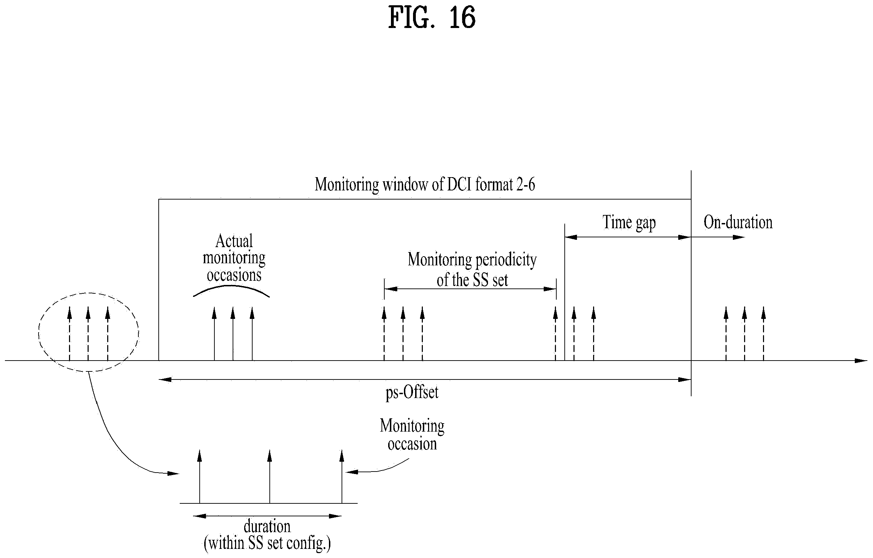

Referring to FIG. 16, a monitoring occasion for DCI format 2_6 may be determined by ps-Offset indicated by the network and a time gap reported by the UE. In this case, the time gap reported by the UE may be interpreted as a preparation period necessary for an operation after the UE wakes up.

Referring to FIG. 16, the network may provide the UE with a search space (SS) set configuration capable of monitoring DCI format 2_6. According to the corresponding SS set configuration, DCI format 2_6 may be monitored in 3 consecutive slots (i.e., the duration) at the monitoring periodicity interval.

In the DRX configuration, a monitoring window for monitoring DCI format 2_6 may be determined by the start time of the DRX cycle (e.g., a point where the on-duration timer starts) and ps-Offset configured by the network. In addition, PDCCH monitoring may not be required in the time gap reported by the LTE. Consequently, an SS set monitoring occasion on which the UE actually performs monitoring may be determined as a first full duration (i.e., actual monitoring occasions of FIG. 16) within the monitoring window.

If the LTE detects DCI format 2_6 in the monitoring window configured based on ps-Offset, the UE may be informed by the BS whether the UE wakes up in the next DRX cycle.

As shown in Table 9, a PDCCH including DCI format 2_6 has a CRC scrambled with a PS-RNTI. The UE may obtain the location and size of a block (i.e., an information block for the corresponding UE within a related field included in DCI format 2_6) related to the corresponding LTE in DCI format 2_6 from RRC parameters dci-Format2-6 and ps-PositionDCI-2-6. Accordingly, the LTE may receive the information block for the corresponding UE.

According to Embodiment 1-4 of the present disclosure, predetermined bits may be added to the information block in order to inform the UE that the UE needs to monitor default SS set(s), which are predetermined by the RRC configuration, when the DRX active time starts (for example, simultaneously with the start of the DRX active time).

In addition, when the BS needs to perform scheduling to the UE, if the UE receives DCI by monitoring default SS set(s), the UE may obtain SS sets to be additionally monitored from the DCI.

When Embodiment 1-4 is configured for the LTE, the same CORESET as that of a Type2-PDCCH CSS for receiving DCI format 2_6, where default SS set(s) are CRC scrambled with a PS-RNTI, may be set to one of associated SS sets for stable reception based on TCI states.

For example, when the Type2-PDCCH CSS is associated with a first CORESET, and when SS set(s) associated with the first CORESET are configured for the LTE, the LTE and/or BS may determine at least one of the SS set(s) associated with the first CORESET as default SS set(s).

To perform PDCCH monitoring adaptation simultaneously with the start of the DRX active time when the PDCCH monitoring adaptation is indicated in DCI format 2_6, the UE may report to the BS a time gap where an SS set switching time is considered. According to the NR specification, TS 38.213, the minimum value ($P_{switch}$) for switching may be defined for SS set group switching as shown in Table 10.

[Table 10]

| u | Minimum $P_{switch}$ value for UE processing capability 1 [symbols] | Minimum $P_{switch}$ value for UE processing capability 2 [symbols] |
|---|---|---|
| 0 | 25 | 10 |
| 1 | 25 | 12 |
| 2 | 25 | 22 |

Specifically, the UE may monitor at least one SS set at the boundary of a first slot after a symbol corresponding to $P_{switch}$ based on PDCCH monitoring adaptation indicated in DCI format 2_6.

If the minimum value is defined as in Table 10, the BS may set up to 52 symbols as the value of $P_{switch}$ for the UE.

Although FIG. 10 is referred to for convenience of description, but the present disclosure is not limited thereto. That is, separate switching times may be used for Embodiment 1-4. For example, it may be assumed that in Embodiment 1-1, the same switching time as Table 10 is required.

Therefore, when the LTE is configured to be instructed to perform SS set monitoring adaptation within the DRX active time in a monitoring window based on ps-Offset in DCI format 2_6, the UE may be configured to report the time gap in consideration of the switching time.

If a time after the symbol corresponding to $P_{switch}$ from the time when the SS set monitoring adaptation is instructed to the UE through DCI format 2_6 is before the start of the DRX active time, the UE may perform/start the SS set monitoring adaptation based on the start of the DRX active time. For example, the LTE may perform the SS set monitoring adaptation based on DCI format 2_6 simultaneously with the start of the DRX active time. As another example, the LTE may perform/start the SS set monitoring adaptation based on DCI format 2_6 after a predetermined offset from the start of the DRX active time.

Embodiment 1-4 is to instruct the monitoring adaptation within the DRX active time outside the DRX active time, which may be configured for the LTE independently of Embodiment 1-1, Embodiment 1-2, and/or Embodiment 1-3.

### 2. Embodiment 2: Error cases (in case of error)

When the UE is configured with PDCCH monitoring adaptation, an SS set indicated by the BS (e.g., SS set that the BS expects the UE to monitor) may be different from an SS set currently being monitored by the UE, due to various possible error cases and/or misalignment. In this case, the UE and/or BS may determine the occurrence of an error case under certain conditions.

For example, before instructing the LTE to perform the PDCCH monitoring adaptation, the BS may assume that SS set bundle #0 is a group of SS sets to be monitored by the UE. Then, when instructing the UE to perform the PDCCH monitoring adaptation, the BS may assume that SS set bundle #1 is a group of SS sets to be monitored by the UE.

The SS set bundle may be obtained by dividing a plurality of SS sets into two or more groups, which may be the same as the SS set group described in other embodiments. That is, when Embodiment 2 is implemented in combination with Embodiment 1 and at least one of Embodiments 3 to 6, the SS set bundle may be interpreted as the SS set group.

For example, after the BS indicates to the LTE the PDCCH monitoring adaptation in DCI, the UE may receive a PDCCH scheduling a PDSCH in an SS set belonging to SS set bundle #1. However, due to an error case such as the UE failing to detect the PDCCH monitoring adaptation, the UE may keep monitoring SS sets included in SS set bundle #0.

In this case, although the BS transmits the scheduling DCI in SS set bundle #1, that is, the BS transmits information to the UE over the PDSCH scheduled by the scheduling DCI, the UE may transmit no HARQ-ACK for the corresponding PDSCH because the UE fails to receive the scheduling DCI and PDSCH.

Based on the fact that the BS receives no HARQ-ACK for the corresponding PDSCH, the BS may recognize that an error case related to the PDCCH monitoring adaptation of the UE occurs.

In addition, although the UE monitors SS set bundle #1 based on the PDCCH monitoring adaptation indicated by the BS, receives the PDCCH (e.g., scheduling DCI) and the PDSCH in SS set bundle #1, and then transmits the HARQ-ACK for the corresponding PDSCH, the BS may miss the corresponding HARQ-ACK. Even in this case, since the BS does not receive the HARQ-ACK for the corresponding PDSCH, the BS may determine that an error case occurs.

In this case, the BS may transmit a PDCCH to the UE in predetermined default SS set(s). The PDCCH transmitted in the default SS set(s) may be a PDCCH for indicating the PDCCH monitoring adaptation or a PDCCH scheduling a PDSCH.

In this case, the UE may be configured to monitor the default SS set(s) after a certain period of time, that is, to fall back to the default SS set(s). Alternatively, the UE may be configured to monitor the default SS set(s) immediately.

For example, while the UE monitors only SS set bundle #0, if the UE fails to receive a PDCCH in SS set bundle #0 for a certain period of time, the UE may recognize that an error case occurs. Then, the UE may stop monitoring SS set bundle #0 and monitor only the default SS set(s). If the default SS set(s) are included in SS set bundle #0, the LTE may stop monitoring of the remaining SS sets except for the default SS set(s) in SS set bundle #0.

As another example, the UE may always monitor the default SS set(s) together with SS set bundle #0. The default SS set(s) may be always monitored regardless of the PDCCH monitoring adaptation of the BS, and thus, the UE may always monitor the default SS set(s). When the UE recognizes that an error case occurs because the LTE receives no PDCCH in SS set bundle #0 for a certain period of time, the UE may stop monitoring SS set bundle #0 by expecting that a PDCCH will be received only in the default SS set(s).

If the default SS set(s) are included in SS set bundle #0, the LTE may stop monitoring of the remaining SS sets except for the default SS set(s).

In other words, while the UE monitors the default SS set(s) and SS set bundle #0, if the UE recognizes that an error case occurs, the UE may stop monitoring SS set bundle #0. If the UE recognizes that an error case occurs while monitoring SS set bundle #0, the UE may switch to the default SS set(s).

In addition, when the UE is instructed to perform the PDCCH monitoring adaptation, that is, to monitor SS set bundle #1 by monitoring the default SS set(s), the LTE may stop monitoring the default SS set(s) and then monitor SS set bundle #1. Alternatively, the UE may additionally monitor SS set bundle #1 while continuing to monitor the default SS set(s).

However, if the default SS set(s) are included in SS set bundle #1, the LTE may monitor the default SS set(s) and SS set bundle #1 together in any case.

In order for the UE to distinguish error cases, an RRC parameter *monitoringTimer* may be introduced.

For example, when the UE monitors an SS set (group) other than the default SS set(s) based on the PDCCH monitoring adaptation, the UE may operate/start *monitoringTimer* and reset *monitoringTimer* whenever the UE detects DCI in an SS set other than the default SS set(s).

If *monitoringTimer* expires, the LTE may monitor the default SS set(s). In addition, *monitoringTimer* may have a value greater than that of a timer for HARQ retransmission in consideration of HARQ retransmission of the current standard.

The reason for this is to prevent the UE from missing HARQ retransmission scheduling in an SS set before returning when the UE returns to monitoring the default SS set(s) due to expiration of *monitoringTimer*.

### 3. Embodiment 3: PDCCH monitoring adaptation alignment according to DRX active time extension

According to the NR specification, TS 38.321, the DRX active time may be defined as shown in Table 11 below.

[Table 11]

| When a DRX cycle is configured, the Active Time for Serving Cells in a DRX group includes the time while: |
|---|
| - drx-onDurationTimer or drx-InactivityTimer configured for the DRX group is running; or |
| - drx-RetransmissionTimerDL or drx-RetransmissionTimerUL is running on any Serving Cell in the DRX group; or |
| - ra-ContentionResolutionTimer (as described in clause 5.1.5) or msgB-ResponseWindow (as described in clause 5.1.4a) is running; or |
| - a Scheduling Request is sent on PUCCH and is pending (as described in clause 5.4.4); or |

(continued)

- a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a).

According to Table 11, the UE may start the DRX active time by starting *drx-onDurationTimer.* Thereafter, the DRX active time may be extended as defined in the specification. Extended case and related timers may be classified as follows.

1) New transmission: *drx-InactivityTimer*
2) HARQ retransmission: *drx-RetransmissionTimerDL* or *drx-Retransmission Timer UL*
3) Random access procedure

-   *ra-ContentionResolutionTimer* or *msgB-Response Window*
-   When a PDCCH indicating new transmission addressed to the C-RNTI of a MAC entity is not received after successful reception of an RAR for a random access preamble not selected by the MAC entity among contention-based random access preambles

4) Scheduling request: A scheduling request is transmitted over a PUCCH or suspended.

Specifically, when the DRX active time is extended based on the timers described above, the UE may perform SS set monitoring adaptation according to a predetermined rule without any separate instruction in DCI. For example, the UE may perform the SS set monitoring adaptation as in A) to D) below.

A) New transmission: SS sets that are to be monitored or need to be monitored may be limited or configured.
B) HARQ retransmission: SS sets that are to be monitored or need to be monitored may be limited or configured.
C) Random access procedure: The typel-PDCCH CSS may be limited or configured to be monitored.
D) Scheduling request: An SS set where a UL grant is expected may be limited or configured to be monitored.

For example, in case A) and/or B), transmission is currently in progress. Accordingly, the UE may monitor only a minimum number of SS sets (e.g., default SS set(s)) and transmit/receive the current PUSCH and/or PDSCH.
In case C), the UE may expect to receive DCI scheduling Msg2 or Msg4 after transmitting a PRACH preamble for random access. Therefore, the LTE may be configured to monitor only the typel-PDCCH CSS or monitor one or more SS set(s) including at least the typel-PDCCH CSS.
In case D), after the scheduling request, the LTE may be configured to monitor only an SS set where BD of UL grant DCI from the BS is expected or monitor some SS sets including at least the corresponding SS set. For example, since the UL grant DCI is capable of being transmitted in a USS, the UE may monitor only the USS or monitor one or more SS set(s) including at least the USS in order to perform BD of the UL grant DCI
On the other hand, if SS set(s) that are to be monitored or need to be monitored in cases A) to D) are defined during the RRC configuration between the UE and BS, greater power saving may be expected. For example, if the BS configures to the LTE one or more USSs to perform transmission for each of the purposes of cases A), B), and D), the LTE may monitor only a minimum number of SS sets based on the one or more USS configured for each of cases A), B), and D).
In cases A) to D), the BS may expect that the UE will not monitor the remaining SS sets except for the SS set(s) that the LTE should monitor. Therefore, the BS may not transmit DL/UL scheduling DCI for the remaining SS sets to the corresponding LTE.

## 4. Embodiment 4: Triggering DCI

The PDCCH monitoring adaptation methods described above in Embodiment 1-1, Embodiment 1-2, and Embodiment 1-3 may be indicated in DCI format x_1, DCI format x_2, or DCI format 2_6.
However, for DCI format 2_6, since reception thereof is allowed outside the DRX active time but is not allowed within the DRX active time, additional technical descriptions may be required.
A PDCCH monitoring adaptation method in Embodiment 1-4 may be indicated in DCI format 2_6.
A bit/field indicating PDCCH monitoring adaptation may be configured/determined to have one or more bits depending on applied technologies. For example, reserved bits of DCI formats x_1 and x_2 may be used to indicate the PDCCH monitoring adaptation for power saving of the UE simultaneously with DL/UL scheduling. If DCI does not indicate the DL/LTL scheduling and PDCCH monitoring adaptation to the LTE at the same time, reserved bits or specific bits (e.g., bit/field for the PDCCH monitoring adaptation) in the DL/LTL scheduling DCI may be fixed. That is, predefined values may be mapped to the reserved bits or specific bits. Alternatively, by configuring a PDCCH monitoring adaptation flag bit, other existing indication bits may be configured to be interpreted for the PDCCH monitoring adaptation.

The bit/field simultaneously indicating the PDCCH monitoring adaptation and scheduling may be configured/determined to have one or more bits according to Embodiment 1-1 to Embodiment 1-4 described above. In addition, when two or more embodiments of Embodiment 1-1 to Embodiment 1-4 are applied in combination, a bit for identifying the PDCCH monitoring adaptation operation according to each embodiment may be configured separately.

Since DCI format x_1 and/or DCI format x_2 is transmitted in a USS, it may be configured/defined that monitoring of the USS for DCI format x_1 and/or DCI format x_2 is not skipped based on the BD/CCE limit of the UE. For example, the BS may configure/define that the UE needs to first monitor default SS set(s) related to the USS for DCI format x_1 and/or DCI format x_2 with priority over a CSS.

For example, among PDCCH monitoring adaptation methods, SS set group switching (e.g., Embodiment 1-2) and PDCCH monitoring skipping (e.g., Embodiment 1-3) may be simultaneously configured and then indicated in one piece of DCI. For example, the switching/skipping may be indicated by a one-bit flag of the DCI indicating the PDCCH monitoring adaptation, and switching groups or skipping durations may be indicated by n bits located after the one-bit flag according to the switching and skipping. For example, if the value of the one-bit flag included in the DCI is '0' (or '1'), it may be interpreted as the SS set group switching, and a corresponding SS set group may be monitored according to the value of the n bits after the one-bit flag.

Alternatively, if the value of the one-bit flag included in the DCI is '1' (or '0'), it may be interpreted as the PDCCH monitoring skipping, and PDCCH monitoring may be skipped during a corresponding duration according to the value of the n bits after the one-bit flag.

In this case, the number of SS set switching groups may be three or more. In addition, the PDCCH monitoring skipping duration may be represented in units of symbols, slots, or milliseconds, and the PDCCH monitoring skipping duration may be indicated to be skipped until a next DRX cycle.

When the SS set group switching and PDCCH monitoring skipping are capable of being configured simultaneously by the one piece of DCI, the number of bits required to indicate the SS set group switching may be different from the number of bits required to indicate the PDCCH monitoring skipping.

For example, according to Rel-16 specifications, multiple times of SS set group switching may be configured, but in the actual operation, only two SS set groups: SS set group #0 and SS set group #1 may be used.

Therefore, assuming that switching is allowed between only SS set group #0 and SS set group #1, the SS set group switching may be indicated with only one bit. For example, if the corresponding one-bit value is 0, the SS set to be monitored may be switched to SS set group#0. If the corresponding one-bit value is 1, the SS set to be monitored may be switched to SS set group#1.

Alternatively, if the corresponding one-bit value is 0, the SS set group switching may not be performed. If the corresponding one-bit value is 1, the SS set group switching may be performed. Alternatively, if the corresponding one-bit value is toggled compared to the previous one-bit value, the SS set group switching may be performed. If the corresponding one-bit value is not toggled compared to the previous one-bit value, the SS set group switching may be configured not to be performed.

However, if the UE is configured to always monitor the default SS set(s), $P_{switch}$ may be applied. For example, the switched SS set group may be monitored in a first slot after $P_{switch}$ from the time when the DCI indicating the SS set group switching is received.

For the PDCCH monitoring skipping, a plurality of durations including skipping until the next DRX cycle may be indicated. Accordingly, two or more bits of DCI may be required. In addition, it may be necessary to configure various LTE operations related to the plurality of durations. In this case, each of the plurality of durations may be expressed in units of slots, symbols, and/or subframes.

If the SS set group switching and PDCCH monitoring skipping are configured simultaneously by one piece of DCI, the above-described switching gap, $P_{switch}$ may be applied only when the SS set group switching is indicated, but the switching gap, $P_{switch}$ may not be applied to the PDCCH monitoring skipping. However, a prescribed period of time may be required for DCI decoding even during the PDCCH monitoring skipping. In this case, the prescribed period of time may be shorter than $P_{switch}$.

For example, the prescribed period of time may be the same as N2, which is the UE processing time defined in the NR system, or the prescribed period of time may be configured separately from N2. After checking the DCI, the UE may apply the corresponding prescribed period of time or $P_{switch}$ depending on the operation indicated by the DCI. That is, if the received DCI indicates the SS set group switching, $P_{switch}$ may be applied. If the received DCI indicates the PDCCH monitoring skipping, the prescribed period of time may be applied.

In addition, if DCI indicating PDCCH monitoring skipping is received during C) random access procedure and D) scheduling request process in the above-described operations associated with the DRX timer, the UE may need to receive DCI expected in the current situation (for example, for case C), DCI scheduling Msg2 or Msg4 and for case D), UL grant DCI). Accordingly, the LTE may ignore the DCI indicating the PDCCH monitoring skipping.

In the Rel-16 specifications, SS set group switching may be explicitly/implicitly indicated by DCI format 2_0. Table 12 shows DCI format 2_0 defined in the NR specification, TS 38.212.

[Table 12]

| 7.3.1.3.1 Format 2_0 |
| --- |
| DCI format 2_0 is used for notifying the slot format, COT duration, available RB set, and search space set group switching. |
| The following information is transmitted by means of the DCI format 2_0 with CRC scrambled by SFI-RNTI: |
| - If the higher layer parameter slotFormatCombToAddModList is configured, |
| - Slot format indicator 1, Slot format indicator 2, ..., Slot format indicator N, |
| - If the higher layer parameter availableRB-SetsToAddModList is configured, |
| - Available RB set Indicator 1, Available RB set Indicator 2, ..., Available RB set Indicator N1, |
| - If the higher layer parameter co-DurationsPerCellToAddModList is configured |
| - COT duration indicator 1, COT duration indicator 2, ..., COT duration indicator N2. |
| - If the higher layer parameter switchTriggerToAddModList is configured |
| - Search space set group switching flag 1, Search space set group switching flag 2, ..., Search space set group switching flag M. |
| The size of DCI format 2_0 is configurable by higher layers up to 128 bits, according to Clause 11.1.1 of [5, TS 38.213]. |

However, in the information included in DCI format 2_0, the COT duration and available RB set may not be required for SS set group switching of NR UEs in a licensed band. Therefore, it may be more preferable to use DCI format x_1, DCI format x_2, or DCI format 2_6 to indicate the SS set group switching according to the embodiments of the present disclosure, instead of using DCI format 2_0.

Depending on the value of an SS set group switching flag in DCI format 2_0, the UE may be instructed to perform the SS set group switching. In this case, if the SS set group switching flag is configured, that is, if the SS set group switching is clearly indicated, it may be interpreted to mean that the SS set group switching is explicitly indicated.

On the other hand, even if no SS set group switching flag is configured, the UE may perform the SS set group switching only by detecting DCI format 2_0. In this case, it may be interpreted to mean that the SS set group switching is implicitly indicated.

However, assuming that the SS set group switching for power saving is indicated by DCI format x_1, DCI format x_2, or DCI format 2_6 rather than DCI format 2_0, if no SS set group switching flag is configured as in the current Rel-16 system, it may be inappropriate that the SS set group switching is performed only based on DCI detection.

For example, it may be assumed that SS set group #0 is an SS set group capable of guaranteeing a power saving benefit by reducing the number of times of PCCH monitoring and SS set group #1 is an SS set group when there is active traffic between the UE and BS. That is, the number of SS sets included in SS set group #0 may be smaller than the number of SS sets included in SS set group #1.

If it is explicitly indicated by DCI format x_1, DCI format x_2, or DCI format 2_6 that the UE needs to perform SS set group switching to SS set group #1 while monitoring SS set group #0, or if the UE simply detects DCI format x_1, DCI format x_2, or DCI format 2_6, the LTE may be able to perform the SS set group switching to SS set group #1.

It may be explicitly indicated by DCI format x_1, DCI format x_2, or DCI format 2_6 that the UE needs to switch to SS set group #0 while monitoring SS set group #1. However, it may be inappropriate that the UE switches to SS set group #0 simply by detecting DCI format x_1, DCI format x_2, or DCI format 2_6.

If the UE monitors SS set group #1, it may be assumed that the UE is actively exchanging information with the BS. Accordingly, it may be inappropriate that the UE switches to SS set group #0 for power saving simply upon detecting DCI.

Therefore, for SS set group switching from SS set group #1 to SS set group #0, that is, for switching from traffic mode to power saving mode, it may be necessary to provide an explicit indication through a field (e.g., flag) in DCI.

Considering that switching from SS set group#0 to SS set group#1 and switching from SS set group#1 to SS set group#0 operate as a pair, it may be desirable to provide an explicit indication for SS set group switching for power saving through the SS set group switching flag.

For example, if DCI format x_1 or x_2 indicates SS set group switching, the following fields: time domain resource assignment, frequency domain resource assignment, modulation and coding scheme, and/or redundancy version may be reused for the corresponding SS set group switching flag.

For DCI format 2_6, the wake-up indication field and/or the SCell dormancy indication field may be reused for the corresponding SS set group switching flag.

However, switching from SS set group#0 to SS set group#1 may be performed based on detection of random DCI or specific DCI (e.g., scheduling DCI). That is, if the UE receives the random DCI or specific DCI while monitoring SS set group #0, the LTE may be able to switch to SS set group #1.

## 5. Embodiment 5: PDCCH monitoring adaptation for carrier aggregation (CA) or secondary DRX

When the UE is configured with CA, PDCCH monitoring adaptation may also be indicated to the UE. For SS set group switching of the UE configured with CA in the Rel-16 system, if an operation is indicated for one cell regarding the operations of cells configured by cellGroupsForSwitchList, the same operation may be performed for other cells. Therefore, even for the PDCCH monitoring adaptation methods (or schemes) proposed in the present disclosure, if a specific operation is indicated for one cell or an operation for one cell is performed based on a timer, the same operation may be performed for other cells.

For PDCCH monitoring skipping, a PDCCH monitoring skipping duration may be configured in various ways. In this case, if the PDCCH monitoring skipping duration is configured until the next DRX cycle or in absolute time units such as milliseconds, the same PDCCH monitoring skipping operation may be performed regardless of the subcarrier spacing (SCS) of a cell.

However, when the PDCCH monitoring skipping duration is indicated in units of symbols or slots, or when the SS set group switching needs to start after the switching gap, $P_{switch}$, an operation criterion when each cell has a different SCS may be required.

In all of the above cases, the PDCCH monitoring skipping duration and/or switching gap may be calculated based on the lowest or highest SCS among those of cells where the PDCCH monitoring skipping and/or SS set group switching operates. Alternatively, the reference SCS or reference cell may be preconfigured by RRC.

For example, if a PDCCH monitoring skipping duration of two slots is indicated to the UE configured with cell #0 with an SCS of 15 kHz and cell #1 with an SCS of 30 kHz, the PDCCH monitoring skipping may be performed based on a length of two slots with respect to 15 kHz, which is the lowest SCS.

Alternatively, for cell #0 having the 15 kHz SCS, the PDCCH monitoring skipping may performed for one slot with respect to 30 kHz, which is the highest SCS, and for cell #1 having the 30 kHz SCS, the PDCCH monitoring skipping may be performed for two slots.

Similarly, the $P_{switch}$ symbol may be calculated for the SS set group switching. For example, when $P_{switch}$ is set to 25 symbols, and when the UE is configured with cell #0 with an SCS of 15 kHz and cell #1 with an SCS of 30 kHz, for cell #0, the UE may perform the SS set group switching in a first slot after 25 symbols from the time when DCI indicating the SS set group switching is received with respect to the lowest SCS. For cell #1, the LTE may perform the SS set group switching in a first slot after 50 symbols from the time when the DCI indicating the SS set group switching is received.

Alternatively, for cell #0, the LTE may perform the SS set group switching in a first slot after 12 symbols (obtained by applying the floor function) or 13 symbols (obtained by applying the ceil function) from the time when the DCI indicating the SS set group switching is received with respect to the highest SCS. For cell #1, the LTE may perform the SS set group switching in a first slot after 25 symbols from the time when the DCI indicating the SS set group switching is received.

The PDCCH monitoring adaptation may be applied differently for each cell or each DRX group. In this case, the corresponding PDCCH monitoring adaptation may be indicated for each cell or each DRX group with the number of bits equivalent to (the number of PDCCH monitoring adaptation indication bits * the number of cells).

The UE may be configured with secondary DRX with different timers such as InactivityTimer and/or onDurationTimer of DRX. The PDCCH monitoring adaptation may be configured to be the same for each DRX or may be configured to be different for each DRX.

If the PDCCH monitoring adaptation is configured to be different for each DRX, each PDCCH monitoring adaptation operation may be configured separately through higher layer (e.g., RRC) signaling.

In this case, the SS set group, switching gap, and/or PDCCH monitoring skipping duration may be configured for each DRX.

Alternatively, the secondary DRX may be configured according to a specific ratio with respect to one DRX. For example, the length of a timer such as InactivityTimer and/or onDurationTimer for the secondary DRX may be set shorter than that of the one DRX. In addition, the length of the timer for the secondary DRX may be calculated according to the above-described average ratio with respect to the one DRX. Therefore, the switching gap and PDCCH monitoring skipping duration may be automatically configured based on the corresponding average ratio. However, since the switching gap is a value that reflects the processing capability of the UE, the minimum value of the switching gap for the one DRX may be maintained as it is. Alternatively, if a value obtained by reducing the switching gap based on the average ratio is less than the minimum switching gap, the original minimum value may be applied.

**6. Embodiment 6: Interaction between PDCCH monitoring skipping and BWP inactivity timer**

When an active BWP is activated, the UE may start a BWP inactivity timer. When the timer expires, the UE may be configured to fall back to a default BWP.

When DCI indicating PDCCH monitoring skipping is received in the active BWP, and when a PDCCH monitoring skipping duration is longer than the corresponding BWP inactivity timer, an operation of immediately returning to the default BWP from the active BWP may be configured.

Thereafter, the LTE may perform various operations as follows: the LTE may perform the PDCCH monitoring skipping in the default BWP during the PDCCH monitoring skipping duration of DCI received in the active BWP; the UE may monitor default SS set(s) during the PDCCH monitoring skipping duration; and the UE may monitor SS sets of an SS set group (e.g., SS set group for traffic mode) with a high priority during the PDCCH monitoring skipping duration.

In addition, the BWP inactivity timer may restart when DCI (e.g., DL assignment, UL grant, and/or configured grant) is received. However, since the DCI indicating the PDCCH monitoring skipping is to stop or reduce monitoring of the UE for power saving, even if the DCI indicating the PDCCH monitoring skipping is received, the UE may be configured not to restart the BWP inactivity timer.

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

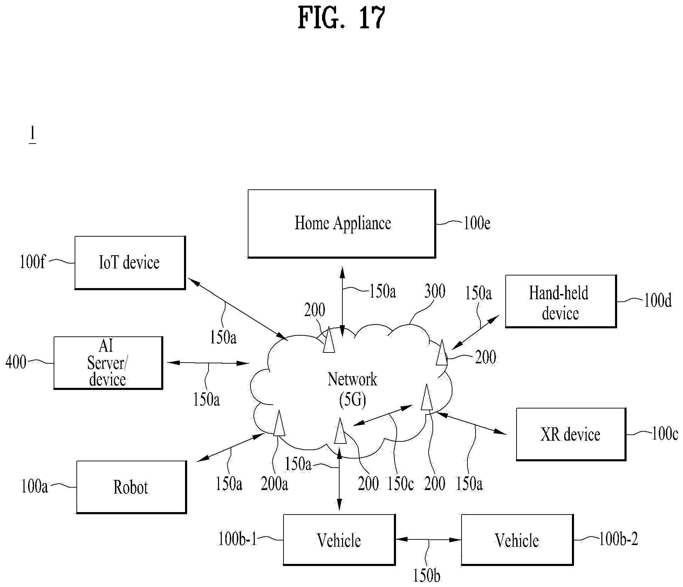

FIG. 17 illustrates a communication system 1 applied to the present disclosure.

Referring to FIG. 17, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fBS 200 and between the BSs 200. Herein, the wireless communication/connections may be established through various RATs (e.g., 5GNR) such as UL/DL communication 150a, sidelink communication 150b (or, D2D communication), or inter-BS communication (e.g. relay or integrated access backhaul (TAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

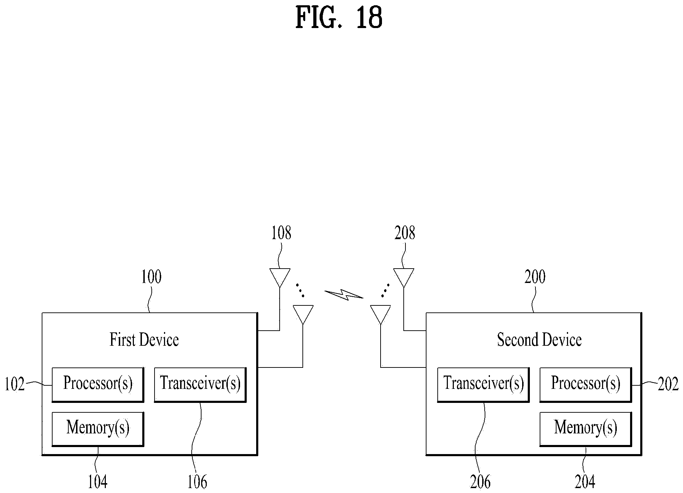

FIG. 18 illustrates wireless devices applicable to the present disclosure.

Referring to FIG. 18, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

Specifically, instructions and/or operations, controlled by the processor(s) 102 of the first wireless device 100 and stored in the memory(s) 104 of the first wireless device 100, according to an embodiment of the present disclosure will now be described.

Although the following operations will be described based on a control operation of the processor(s) 102 in terms of the processor(s) 102, software code for performing such an operation may be stored in the memory 104. For example, in the present disclosure, the at least one memory(s) 104 may store instructions or programs as a computer-readable storage medium. The instructions or the programs may cause, when executed, at least one processor operably connected to the at least one memory to perform operations according to embodiments or implementations of the present disclosure, related to the following operations.

Specifically, the processor(s) 102 may control the transceiver(s) 106 to receive DCI related to PDCCH monitoring adaptation from the BS. In this case, the processor(s) 102 may control the transceiver(s) 106 to receive the DCI according to [Embodiment 4].

The processor(s) 102 may monitor a PDCCH within a DRX active time based on the DCI. Specifically, the processor(s) 102 may monitor the PDCCH according to [Embodiment 1], [Embodiment 3], [Embodiment 5], and/or [Embodiment 6].

The processor(s) 102 may operate a monitoring timer while monitoring the PDCCH within the DRX active time. In this case, if the PDCCH is received before the monitoring timer expires, the processor(s) 102 may reset the monitoring timer again and continuously monitor the PDCCH based on the received DCI. If the PDCCH is not received until the monitoring timer expires, the processor(s) 102 may monitor the PDCCH based on a default SS set. To this end, the UE may operate as described above in [Embodiment 2].

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Specifically, instructions and/or operations, controlled by the processor 202 of the second wireless device 200 and stored in the memory 204 of the second wireless device 200, according to an embodiment of the present disclosure will now be described.

Although the following operations will be described based on a control operation of the processor 202 in terms of the processor 202, software code for performing such an operation may be stored in the memory 204. For example, in the present disclosure, the at least one memory 204 may store instructions or programs as a computer-readable storage medium. The instructions or the programs may cause, when executed, at least one processor operably connected to the at least one memory to perform operations according to embodiments or implementations of the present disclosure, related to the following operations.

Specifically, the processor(s) 202 may control the transceiver(s) 206 to transmit DCI related to PDCCH monitoring adaptation to the LTE. In this case, the processor(s) 202 may control the transceiver(s) 206 to transmit the DCI to the UE according to [Embodiment 4].

The processor(s) 202 may control the transceiver(s) 206 to transmit a PDCCH to the LTE based on the DCI. Specifically, the processor(s) 202 may control the transceiver(s) 206 to transmit the PDCCH to the UE according to [Embodiment 1], [Embodiment 3], [Embodiment 5], and/or [Embodiment 6].

Although the processor(s) 202 controls the transceiver(s) 206 to transmit the PDCCH, the processor(s) 202 may not receive a HARQ-ACK for a PDSCH scheduled by the corresponding PDCCH through the transceiver(s) 206. If the processor(s) 202 receives the HARQ-ACK from the UE through the transceiver(s) 206, the processor(s) 202 may control the transceiver(s) 206 to continuously transmit the PDCCH to the UE based on the DCI.

However, if the processor(s) 202 does not receive the HARQ-ACK from the UE through the transceiver(s) 206, the processor(s) 202 may control the transceiver(s) 206 to transmit the PDCCH to the UE in a default SS set. To this end, the BS may operate as described above in [Embodiment 2].

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices.

The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

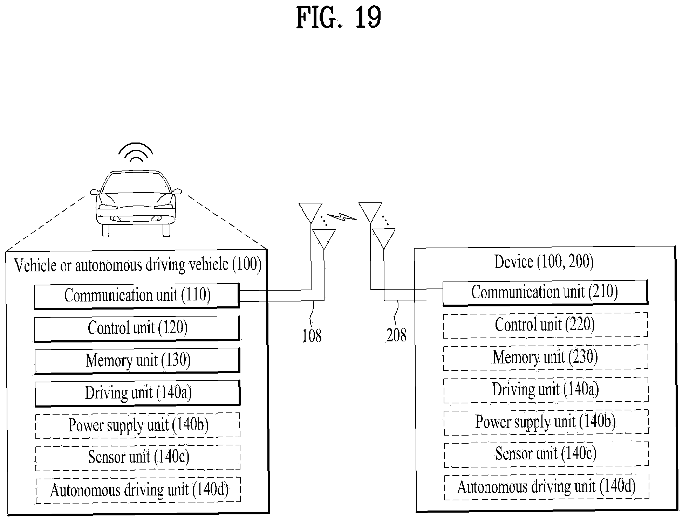

FIG. 19 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The embodiments of the present disclosure described herein below are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the present disclosure or included as a new claim by a subsequent amendment after the application is filed.

In the present disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

While the above-described method of transmitting and receiving a DL control channel and the apparatus therefor have been described based on an example applied to a 5G NR system, the method and apparatus are applicable to various wireless communication systems in addition to the 5GNR system.

**Claims**

1. A method of receiving a physical downlink control channel (PDCCH) by a user equipment (UE) in a wireless communication system, the method comprising:

   receiving information on a first search space set to be monitored by the LTE among a plurality of search space sets;
   monitoring the first search space set based on the information;
   monitoring a second search space set based on that the PDCCH is not received in the first search space set; and
   receiving the PDCCH in the second search space set.

2. The method of claim 1, wherein the monitoring of the second search space set is performed based on that the PDCCH is not received in the first search space set during a specific duration.

3. The method of claim 2, wherein the specific duration is related to a monitoring timer, and wherein the monitoring timer is restarted based on that the PDCCH is received in the first search space set.

4. The method of claim 1, wherein based on that the PDCCH is not received in the first search space set, the monitoring of the first search space set is stopped, and the monitoring of the second search space set is started.

5. The method of claim 1, wherein the second search space set is always monitored regardless of the information.

6. A user equipment (LTE) configured to receive a physical downlink control channel (PDCCH) in a wireless communication system, the LTE comprising:

   at least one transceiver;
   at least one processor; and
   at least one memory operably connected to the at least one processor and configured to store instructions that, when executed, cause the at least one processor to perform operations comprising:

      receiving information on a first search space set to be monitored by the LTE among a plurality of search space sets through the at least one transceiver;
      monitoring the first search space set based on the information;
      monitoring a second search space set based on that the PDCCH is not received in the first search space set; and
      receiving the PDCCH in the second search space set through the at least one transceiver.

7. The UE of claim 6, wherein the monitoring of the second search space set is performed based on that the PDCCH is not received in the first search space set during a specific duration.

8. The UE of claim 7, wherein the specific duration is related to a monitoring timer, and wherein the monitoring timer is restarted based on that the PDCCH is received in the first search space set.

9. The UE of claim 6, wherein based on that the PDCCH is not received in the first search space set, the monitoring of the first search space set is stopped, and the monitoring of the second search space set is started.

10. The UE of claim 6, wherein the second search space set is always monitored regardless of the information.

11. An apparatus configured to receive a physical downlink control channel (PDCCH) in a wireless communication system, the apparatus comprising:

at least one processor; and
at least one memory operably connected to the at least one processor and configured to store instructions that, when executed, cause the at least one processor to perform operations comprising:

receiving information on a first search space set to be monitored by the LTE among a plurality of search space sets;
monitoring the first search space set based on the information;
monitoring a second search space set based on that the PDCCH is not received in the first search space set; and
receiving the PDCCH in the second search space set.

12. A computer-readable storage medium comprising at least one computer program that causes at least one processor to perform operations comprising:

receiving information on a first search space set to be monitored by the LTE among a plurality of search space sets;
monitoring the first search space set based on the information;
monitoring a second search space set based on that the PDCCH is not received in the first search space set; and
receiving the PDCCH in the second search space set.

13. A method of transmitting a physical downlink control channel (PDCCH) by a base station in a wireless communication system, the method comprising:

transmitting information on a first search space set to be monitored by a user equipment (UE) among a plurality of search space sets;
transmitting the PDCCH in the first search space set based on the information; and
based on that a hybrid automatic repeat request acknowledgment (HARQ-ACK) signal for a physical downlink shared channel (PDSCH) scheduled by the PDCCH is not received, transmitting the PDCCH in a second search space set.

14. A base station configured to transmit a physical downlink control channel (PDCCH) in a wireless communication, the base station comprising:

at least one transceiver;
at least one processor; and
at least one memory operably connected to the at least one processor and configured to store instructions that, when executed, cause the at least one processor to perform operations comprising:

transmitting information on a first search space set to be monitored by a user equipment (UE) among a plurality of search space sets;
transmitting the PDCCH in the first search space set based on the information; and
based on that a hybrid automatic repeat request acknowledgment (HARQ-ACK) signal for a physical downlink shared channel (PDSCH) scheduled by the PDCCH is not received, transmitting the PDCCH in a second search space set.

# FIG. 1

EP 4 236 478 A1

INITIAL          SYSTEM
CELL          INFORMATION          RANDOM ACCESS          GENERAL DL/UL Tx/Rx
SEARCH          RECEPTION          PROCEDURE          S18

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH PUCCH |

S11          S12          S13     S14          S15     S16          S17     · DL/UL ACK/NACK
                                                                    · UE CQI/PMI/RI RANK REPORT
                                                                      USING PUSCH AND PUCCH

# FIG. 2

| . . . . . . | One Frame (10ms) | . . . . |
|---|---|---|

| . . . . . . | Half-Frame (5ms) | Half-Frame (5ms) | . . . . |
|---|---|---|---|

| . . . . . . | Subframe 0 (1ms) | . . . . . . | Subframe 4 (1ms) | Subframe 5 (1ms) | . . . . . . | Subframe 9 (1ms) | . . . . |
|---|---|---|---|---|---|---|---|

Subframe (1ms)

**15KHz**

| Slot (14 symbols) |
|---|

1ms

**30KHz**

| Slot 0 (14 symbols) | Slot 1 |
|---|---|

500us

**60KHz**

| Slot 0 (14 symbols) | Slot 1 | Slot 2 | Slot 3 |
|---|---|---|---|

250us

**120KHz**

| Slot 0 (14 symbols) | Slot 1 | Slot 2 | Slot 3 | Slot 4 | Slot 5 | Slot 6 | Slot 7 |
|---|---|---|---|---|---|---|---|

125us

# FIG. 3

Resource grid

A carrier
(up to 3300 subcarriers, i. e., 275 RBs)

A BWP

1 RB = 12 subcarriers

1 RE

1 subcarrier

1 symbol

k = 0

l = 0 · · · · ·

# FIG. 4

Long PUCCH

PDCCH | Gap | PDSCH/PUSCH | Short PUCCH

Long PUCCH

One slot

f
t

## FIG. 5

DL assingment-to-PDSCH offset (K0)

UL grant-to-PUSCH offset (K2)

PDCCH

PDSCH

PUCCH

PDCCH

PUSCH

PDSCH-to-HARQ-ACK reporting offset (K1)

# FIG. 6

REG

1 symbol

| D | R | D | D | D | R | D | D | D | R | D | D | D |

t

f

1 resource block

# FIG. 7

Non - interleaved CCE - to - REG mapping

(a)

(b)

EP 4 236 478 A1

# FIG. 8

Block interleaver

Write                   Read

$A$

$P/A$

# FIG. 9

UE

BS

Idle mod DRX configuration (S910)

S920 — | Determine PF and P0 with in DRX cycle |

S930 — | PDCCH monitoring |

FIG. 10

Scheduling start

PDCCH monitoring

Data Reception    Subframe=1ms                    Paging DRX Cycle

| 'RRC_Connected' state | 'RRC_Idle' state |
| --- | --- |

# FIG. 11

UE

BS

RRC signaling (DRX confuguration) (S1110)

MAC CE (DRX Command=DRX 'ON') (S1120)

S1130 — PDCCH monitoring

# FIG. 12

# FIG. 13

UE shall monitor
PDCCH →

|←On Duration→|←——— Opportunity for DRX ———→|

|←———————————— DRX Cycle ————————————→|

# FIG. 14

Receiving DCI related to PDCCH monitoring adaptation — S1401

Monitoring PDCCH based on the DCI — S1403

S1405

PDCCH is received before monitoring Timer is expired?

Yes → Resetting monitoring Timer — S1407

No → S1411 — Monitoring PDCCH based on default SS set

Monitoring PDCCH based on the DCI continuously — S1409

## FIG. 15

```
┌─────────────────────────────────┐
│  Transmitting DCI related to PDCCH │ ── S1501
│       monitoring adaptation       │
└─────────────────────────────────┘
                │
                ▼
┌─────────────────────────────────┐
│  Transmitting PDCCH based on the DCI │ ── S1503
└─────────────────────────────────┘
                │           S1505
                ▼
         ╱─────────────╲
  Yes   ╱  HARQ-ACK     ╲   No
 ◄──────  related to the  ──────►
        ╲  PDCCH is      ╱
         ╲  received?   ╱
          ╲───────────╱
     │                        │
     ▼                        ▼
┌──────────────────┐    ┌──────────────────┐
│ Transmitting PDCCH│    │ Transmitting PDCCH│
│ based on the DCI  │─S1507   S1509─│ based on default SS set│
│ continuously     │    │                  │
└──────────────────┘    └──────────────────┘
```

FIG. 16

...

# FIG. 17

<u>1</u>

# FIG. 18

# FIG. 19

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100, 200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| | International application No. |
|---|---|
| | **PCT/KR2021/014769** |

**A. CLASSIFICATION OF SUBJECT MATTER**

**H04W 52/02**(2009.01)i; **H04W 72/12**(2009.01)i; **H04W 72/04**(2009.01)i; **H04W 76/28**(2018.01)i; **H04L 5/00**(2006.01)i; **H04L 1/00**(2006.01)i

According to International Patent Classification (IPC) or to both national classification and IPC

**B. FIELDS SEARCHED**

Minimum documentation searched (classification system followed by classification symbols)

H04W 52/02(2009.01); H04L 5/00(2006.01); H04W 72/04(2009.01); H04W 72/12(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탐색 공간 집합(Search Space Set), PDCCH(Physical Downlink Control Channel), HARQ-ACK(Hybrid Automatic Repeat Request-Acknowledgment), 모니터링(monitoring), 타이머(timer), 전환(switch)

**C. DOCUMENTS CONSIDERED TO BE RELEVANT**

| Category* | Citation of document, with indication, where appropriate, of the relevant passages | Relevant to claim No. |
|---|---|---|
| Y | WO 2020-064908 A1 (TELEFONAKTIEBOLAGET LM ERICSSON (PUBL)) 02 April 2020 (2020-04-02)<br>See page 12, lines 1-8; page 20, lines 1-10; and claims 1-2 and 6-10. | 1-14 |
| Y | WO 2019-140060 A1 (IDAC HOLDINGS, INC.) 18 July 2019 (2019-07-18)<br>See paragraph [0109]. | 1-14 |
| Y | VIVO. Remaining issues on physical DL channel design in unlicensed spectrum. R1-2001650, 3GPP TSG RAN WG1 #100bis. e-Meeting. 10 April 2020.<br>See section 2.1. | 5,10 |
| A | US 2020-0314898 A1 (QUALCOMM INCORPORATED) 01 October 2020 (2020-10-01)<br>See paragraphs [0083]-[0103]. | 1-14 |
| A | US 2020-0100222 A1 (QUALCOMM INCORPORATED) 26 March 2020 (2020-03-26)<br>See paragraphs [0129]-[0149]. | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 February 2022** | **10 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/014769**

| Patent document cited in search report | | | Publication date (day/month/year) | Patent family member(s) | | | Publication date (day/month/year) |
|---|---|---|---|---|---|---|---|
| WO | 2020-064908 | A1 | 02 April 2020 | None | | | |
| WO | 2019-140060 | A1 | 18 July 2019 | BR | 112020014199 | A2 | 01 December 2020 |
| | | | | CN | 111566979 | A | 21 August 2020 |
| | | | | EP | 3738261 | A1 | 18 November 2020 |
| | | | | KR | 10-2020-0120621 | A | 21 October 2020 |
| | | | | TW | 201939983 | A | 01 October 2019 |
| | | | | TW | 202119840 | A | 16 May 2021 |
| | | | | US | 2021-0368541 | A1 | 25 November 2021 |
| US | 2020-0314898 | A1 | 01 October 2020 | TW | 202046672 | A | 16 December 2020 |
| | | | | WO | 2020-197743 | A1 | 01 October 2020 |
| US | 2020-0100222 | A1 | 26 March 2020 | AU | 2019-344667 | A1 | 26 March 2020 |
| | | | | BR | 112021004309 | A2 | 25 May 2021 |
| | | | | CA | 3109665 | A1 | 26 March 2020 |
| | | | | CL | 2021000651 | A1 | 01 October 2021 |
| | | | | CN | 112740562 | A | 30 April 2021 |
| | | | | CO | 2021003434 | A2 | 08 April 2021 |
| | | | | EP | 3854000 | A1 | 28 July 2021 |
| | | | | IL | 280786 | A | 29 April 2021 |
| | | | | KR | 10-2021-0059716 | A | 25 May 2021 |
| | | | | PH | 12021550357 | A1 | 04 October 2021 |
| | | | | SG | 11202101519 | A | 29 April 2021 |
| | | | | US | 11202284 | B2 | 14 December 2021 |
| | | | | WO | 2020-060931 | A1 | 26 March 2020 |

Form PCT/ISA/210 (patent family annex) (July 2019)